# EUROPÄISCHE PATENTANMELDUNG

(11) **EP 2 381 563 A2**
(43) Veröffentlichungstag der Anmeldung: **26.10.2011**
(21) Anmeldenummer: 11162292.4
(22) Anmeldetag: 13.04.2011
(51) Int. Cl.: H02K 15/03

(54) **Vorrichtung, Verfahren und System für die Magnetbestückung eines Läuferrohlings**

(30) Priorität: 20.04.2010 DE 102010016535
(71) Anmelder: Haprotec GmbH, 97892 Kreuzwertheim-Wiebelbach (DE)
(72) Erfinder: Happ, Christian, 97877 Wertheim-Mondfeld (DE); Ganapoler, Viktor, 97909 Stadtprozelten (DE)
(74) Vertreter: Kaufmann, Ursula Josefine

(57) **Zusammenfassung**

Die Erfindung betrifft eine Vorrichtung (1), ein Verfahren und ein System (94) für die Magnetbestückung eines Läuferrohlings (12) eines Elektromotors oder -generators mit Permanentmagneten (14) oder Permanentmagnetrohlingen, umfassend eine Magnetträgereinrichtung (16) und eine Läuferführungseinrichtung (18). Die Magnetträgereinrichtung (16) umfasst eine mehrteilige Aufnahmefläche (20) zur Aufnahme und definierten Lagerung zumindest eines Permanentmagneten/Permanentmagnetrohlings (14). Die Läuferführungseinrichtung (18) umfasst Einspannmittel zum Einspannen eines mit Magnetaufnahmenuten (32) versehenen Läuferrohlings (12), Linearführungsmittel (38) zur linearen Führung des Läuferrohlings (12) in einer normal zur Läuferachse (36) stehenden Führungsebene (42) und Drehführungsmittel (40) zur axialen Drehung des Läufers. Die Vorrichtung (10) ist ausgelegt, zumindest den einen Permanentmagneten (14) durch eine kombinierte lineare und rotatorische Abstreifbewegung der Läuferführungseinrichtung (18) und/oder der Magnetträgereinrichtung (16) von der Aufnahmefläche (20) der Magnetträgereinrichtung (16) in eine Aufnahmenut (32) des Läuferrohlings (12) zu übergeben. Das Verfahren betrifft den Ablauf der kombinierten Abstreifbewegung und das System betrifft eine Läuferbestückungsanlage für eine Hochgeschwindigkeitsfertigung, die eine derartige Magnetbestückungsvorrichtung umfasst.

## Beschreibung

Die vorliegende Erfindung geht aus von einer Magnetübergabevorrichtung für die Magnetbestückung eines Läuferrohlings eines Elektromotors oder -generators mit Permanentmagneten oder Permanentmagnetrohlingen. Des Weiteren betrifft die vorliegende Erfindung ein Verfahren zur Übergabe von Magneten auf einen Läuferrohling und ein System zur automatisierten Bestückung eines Läuferrohlings mit Permanentmagneten.

### STAND DER TECHNIK

Aus dem Stand der Technik sind verschiedene Methoden bekannt, um Läufer von Elektromotoren/-generatoren mit Permanentmagneten oder Permanentmagnetrohlingen zu bestücken. Derartige Permanentmagnetläufer werden in großer Zahl in Gleichstrommaschinen, insbesondere Nebenschluss-, Reihenschluss- oder Doppelschlussmotoren sowie in Drehstromsynchronmotoren oder -generatoren eingesetzt. Sie zeichnen sich dadurch aus, dass sie Permanentmagnete abwechselnder Polung entlang ihres Läuferumfangs aufweisen, deren Magnetisierung im Falle eines Motors einem rotierenden äußeren, durch stromdurchflossene Spulen erzeugten Statormagnetfeld folgt, und dadurch den Läufer in Drehung versetzt, bzw. im Falle eines Generators durch eine äußere mechanisch erzwungene Drehung des Läufers mittels des mitbewegten Permanentmagnetfelds in den äußeren Statorspulen Spannung induziert wird. Grundsätzlich sind solche Motoren als Synchronmotoren ausgelegt, d. h. die Läuferdrehung folgt der magnetischen Drehung des äußeren Statormagnetfeldes, wobei nur ein geringer Schlupfwinkel auftreten kann. Bei Überschreitung eines kritischen Schlupfwinkels kommt der Elektromotor zum Stehen. Permanenterregte Generatoren liefern Wechsel- bzw. Drehspannungen, deren Frequenz proportional der Läuferdrehzahl ist.

Insbesondere bei Permanentmagneten, die bereits vormagnetisiert sind, ergibt sich das Problem, dass diese beim Aufsetzen auf einen ferromagnetischen Läuferrohling vom Läuferrohling angezogen werden und sich gegenseitig abstoßen, so dass aufgrund der auftretenden magnetischen Kräfte eine exakte Platzierung an vorbestimmten Stellen des Läuferumfangs schwer möglich ist. Aus dem Stand der Technik sind Methoden bekannt, bei denen die Magnete von Hand einzeln nacheinander aufgesetzt und in einem Trockenofen zur Aushärtung eines Anheftungsklebers verbracht werden. Die eingesetzten Permanentmagnete bestehen aus Werkstoffen wie Neodym, die spröde sind und schnell zur Zersplitterung neigen, wobei insbesondere bei vormagnetisierten Magnetrohlingen große Kräfte bei Annäherung an ein ferromagnetisches Material wirken. Läuferrohlinge sind meist aus ferromagnetischem Material, insbesondere aus Eisen-, Nickel- oder Kobaltmaterial bzw. Legierungen oder Mischungen davon gefertigt, um einen starken Magnetfluss und damit eine große Leistung des Elektromotors zu gewährleisten. Werden Magnete händisch aufgebracht, so wird eine abwechselnde Nord/Südpolorientierung benachbarter Permanentmagnete von einem bestückenden Arbeiter sichergestellt, wobei Magnete beispielsweise mittels Greifern aufgenommen und an eine gewünschte Stelle am Läuferumfang des Läuferrohlings positioniert werden können. Beim Versuch, die Magnete mit dem Greifer zu halten, können diese bei Annäherung an das ferromagnetischem Material aus dem Greifer springen. Ein Untergreifen der Permanentmagnete kann dies verhindern, jedoch ergibt sich insbesondere bei Läuferrohlingen, die Aufnahmestege aufweisen, das Problem, dass bei Einsetzen der Magnete in Aufnahmenuten eines Läuferrohlings die Stege eine Wegnahme des Greifers behindern. Des Weiteren werden in der Regel nicht einzelne Magnete, sondern eine Reihe von Magneten entlang einer Längsachse eines Läuferrohlings angeordnet, um Läuferrohlinge verschiedener Länge und lang ausgestreckte Magnetreihen bestücken zu können, sowie die Gefahr des Durchbrechens eines einzelnen langen Magneten zu verhindern. Magnete gleicher Polung stoßen sich ab, so dass sich bei dem Absetzen einer Reihe von Magneten hohe Abstoßungskräfte ergeben, die eine händische Aufsetzung erschweren. Folglich ergibt sich beim händischen Aufsetzen die Gefahr, dass sich Magnete aufstellen, abdrehen oder aus den Läufernuten springen. Bei ungewollten Bewegungen der Magnete werden deren Kanten beschädigt, kleine Splitter setzen sich unter die Magnete und verhindern eine saubere Anklebung von Magneten mittels einer Klebmasse an den Läuferrohling, so dass die gewünschte Robustheit nicht erreicht werden kann.

Des Weiteren ist aus dem Stand der Technik bekannt, dass Permanentmagnetrohlinge im unmagnetisierten Zustand auf einen Läuferrohling aufgesetzt werden und anschließend mittels eines Magnetisierungsvorganges magnetisiert werden können. Hierbei ergeben sich keine Probleme mit Abstoßungskräften beim Aufbringen der Magnetrohlinge auf den Läufer, jedoch muss in einem weiteren Arbeitsschritt der Läufer mit einer Bandage umwickelt werden, um die Rohlinge in Position zu halten, wobei diese anschließend einem polrichtigen Magnetisierungsmagnetfeld ausgesetzt werden, um die weissschen Bezirke der Permanentmagnete auszurichten.

In beiden oben genannten Fällen werden in der Regel die Magnete mittels Klebemittel an dem Läuferrohling befestigt, wonach das Klebemittel in einem Aushärtevorgang in einem Trockenofen ausgehärtet wird. Der Klebeauftrag auf dem Läuferrohling ist in der Regel ein handgeführtes Verfahren, bei dem ein Klebemittel auf den Läuferrohling aufgetragen wird. Das Klebemittel wird in der Regel von Hand aufgebracht und verteilt und danach die Permanentmagnete auf die vorgesehenen Flächen des Läuferrohlings aufgesetzt. Die Magnete sind am Läuferumfang abwechselnd in Süd- und Nordpol ausgerichtet. Diese Permanentmagnete oder Permanentmagnetrohlinge werden in Stangen oder Blistern bereitgestellt, wobei bei vormagnetisierten Permanentmagneten die Anziehungskräfte einen Aufsetzvorgang erheblich erschweren. Durch die Abstoßungskräfte können die vorher aufgebrachten Klebemittelfläche verschoben werden, so dass es erhebliche Qualitätsunterschiede bei der Befestigung der Magnete geben kann.

Somit ergeben sich nach den beiden vorgenannten Varianten die Probleme, dass der Klebemittelauftrag und damit die Klebequalität der Permanentmagnete an den Läuferrohlingen nicht gleichmäßig ist, dass durch die Abstoßungskräfte die Permanentmagnete beschädigt werden können, dass eine zusätzliche Bandagierung und ein Magnetisierungsvorgang beim Aufbringen von Permanentmagnetrohlingen und damit weitere Arbeitsschritte erforderlich sind, und dass aufgrund der händischen Arbeit nur geringe Durchlaufzeiten und hohe Lohnkosten entstehen.

Die DE 4235873 A1 beschreibt ein Verfahren zur Bestückung eines Läuferrohlings mit Permanentmagneten, wobei zunächst ein Grundkörper des Läuferrohlings mit einem Rahmen in Form eines Gitters ummantelt wird, und der Rahmen Öffnungen aufweist, die geeignet sind, Permanentmagnete aufzunehmen und zu befestigen. Die Permanentmagnete können aus einer axial zum Läufergrundkörper angeordneten Entnahmeeinrichtung entnommen und maschinell mit Hilfe einer Bestückungseinrichtung in die Öffnungen eingesetzt werden. Permanentmagnete werden mittels Klebemittel am Läuferrohling angeklebt. Zum Einsetzen werden die Permanentmagnete radial in die Öffnungen des Läufergrundkörpers eingesetzt. Dabei ergeben sich zwangsläufig Abstoßungskräfte, die die Nachteile des aus dem Stand der Technik beschriebenen Verfahrens ebenfalls mit sich bringen, so dass zumindest die Gefahr der Kantenabstoßung und Beschädigung der Permanentmagnete weiterhin besteht. Alternativ spricht die vorgenannte Druckschrift von einem axialen Aufschieben von Permanentmagneten in die Öffnungen, wobei ein eventuell vorhandener Klebemittelauftrag verschmiert und ungleichmäßig zwischen Permanentmagnet und Läufergrundkörper verteilt werden würde. Somit wird ein Verfahren zur Herstellung eines permanenterregten Läufers beschrieben, bei dem ein Rahmen am Außenumfang des Läufers als Positionierhilfe zum Aufbringen der Permanentmagnete verwendet wird und wobei die Öffnungen des Rahmens nach Größe und Form exakt den Abmessungen der einzusetzenden Permanentmangnete entspricht. Dabei werden sowohl die Seitenwände der Öffnungen als Führungselemente für die Permanentmagnete verwendet, bzw. solche Führungselemente an den Seitenwänden angeordnet, als auch die Permanentmagnete in radialer Richtung an den Außenumfang herangeführt und dabei eine Bestückungsmaschine verwendet. Weiterhin wird eine gattungsgemäße Verwendung von mehreren Magazinen gelehrt, aus denen heraus die Permanentmagnete zur Bestückung des Läufers entnommen werden. In der DE 199 53 650 C2 wird die Herstellung von als Läuferscheiben dienende Magnetringe aus Einzelmagnetbauteilen beschrieben, wobei gezielt die Nutzung der Handhabungs- und Zuführtechnik der Halbeiterindustrie angestrebt wird. Unter anderem werden dabei auch die zu positionierenden Einzelmagnetbauteile in Magazinen zusammengefasst, mindestens eins dieser Magazine wird zur Zuführung der Magnete in die Montageposition verwendet, zur Montage der Einzelmagnetbauteile kommt ein Roboter zum Einsatz, und das Ablösen der Magnete erfolgt unter ständigem kraft- oder formgeführten Bauteilkontakt. Aus der DE 10 2004 027 036A1 ist ein Synchronmotor mit Rotor bekannt, bei dem Magnete durch Klemmelemente befestigt sind, wobei die Klemmelemente aus am Rotor und zwischen den Magneten angeordneten Stegen bestehen. Nuten sind so in die Stege eingebracht, dass sie ein zumindest abschnittsweises Aufweiten der Stege auf der am Rotor abgewandten Seite ermöglichen.

Ziel der Erfindung ist es daher, eine Magnetübergabevorrichtung, ein Magnetübergabeverfahren und ein System zur automatisierten Bestückung von Läuferrohlingen mit Permanentmagneten oder Permanentmagnetrohlingen vorzuschlagen, die eine hohe Arbeitsgeschwindigkeit, sowie eine qualitativ hochwertige Bestückungsqualität von Läuferrohlingen mit Permanentmagneten ermöglichen.

Diese Aufgaben werden durch eine Magnetübergabevorrichtung, ein Magnetübergabeverfahren und ein System zur automatisierten Bestückung von Läuferrohlingen mit Permanentmagneten/ Permanentmagnetrohlingen nach den unabhängigen Ansprüchen gelöst. Vorteilhafte Weiterentwicklungen der Erfindung sind Gegenstand der Unteransprüche.

### OFFENBARUNG DER ERFINDUNG

In einem ersten Aspekt der Erfindung wird eine Magnetübergabevorrichtung für die Bestückung eines Läuferrohlings eines Elektromotors oder -generators mit Permanentmagneten oder Permanentmagnetrohlingen vorgeschlagen, die eine Magnetträgereinrichtung und eine Läuferführungseinrichtung umfasst. Die Magnetträgereinrichtung umfasst eine mehrteilige Aufnahmefläche zur Aufnahme und definierten Lagerung zumindest eines Permanentmagneten/ Permanentmagnetrohlings. Die Läuferführungseinrichtung umfasst Einspannmittel zum Einspannen eines mit Magnetaufnahmenuten versehenen Läuferrohlings, Linearführungsmittel zur translatorischen Führung des Läuferrohlings in einer normal zur Läuferachse stehenden Führungsebene, und Drehführungsmittel zur axialen Drehung des Läuferrohlings. Somit ist die Vorrichtung ausgelegt, zumindest den einen Permanentmagneten durch eine kombinierte translatorische und rotatorische Abstreifbewegung der Läuferführungseinrichtung und/oder der Magnetträgereinrichtung von der Aufnahmefläche der Magnetträgereinrichtung in eine Aufnahmenut des Läuferrohlings zu übergeben.

Mit anderen Worten betrifft die Magnetübergabevorrichtung zum einen eine Magnetträgereinrichtung, die eine Aufnahmefläche umfasst, auf der ein oder mehrere Permanentmagnete gelagert werden können, so dass er durch eine kombinierte translatorische und rotatorische Abstreifbewegung eines Läuferrohlings von der Aufnahmefläche in eine Aufnahmenut des Läuferrohlings übergeben werden kann. Der Läuferrohling weist Aufnahmenuten und Aufnahmestege auf, die eine definierte Positionierung zumindest eines Permanentmagneten am Umfang des Läuferrohlings ermöglichen. Hierzu müssen die Breiten und Längen der Aufnahmenuten entsprechend formkomplementär zu den Dimensionen des Permanentmagneten oder der Reihe von Permanentmagneten, die auf der Magnetträgereinrichtung liegen, angepasst sein. Zum anderen weist die Läuferführungseinrichtung zumindest Einspannmittel auf, um zumindest einseitig ein axiales Ende des Läuferrohlings einspannen zu können und dieses translatorisch in einer X-Y-Ebene senkrecht zur Läuferrohlingsachse (Führungsebene) zu führen und drehbar um den Läuferrohling um seine Achse zu drehen. Somit kann mittels des Linearführungsmittels eine translatorische und mittels des Drehführungsmittels eine rotatorische Bewegung ausgeführt werden, um den Läuferrohling über der Magnetträgereinrichtung "abrollen" zu lassen, so dass der Permanentmagnet in eine Aufnahmenut des Läuferrohlings verbracht werden kann. Dabei kann es denkbar sein, dass die Läuferführungseinrichtung lediglich eine rotatorische Bewegung durchführt, und zumindest eine translatorische Bewegung (in X-Richtung) durch ein Verfahren der Magnetträgereinrichtung bewirkt werden kann. Es ist lediglich erfindungswesentlich, dass Magnetträgereinrichtung und Läuferführungseinrichtung sowohl translatorisch in X- und Y-Richtung relativ zueinander verfahren werden können, sowie dass der Läuferrohling in Axialrichtung drehbar gelagert ist. Mittels einer kombinierten translatorischen und rotatorischen Abstreifbewegung lässt sich ein Magnet ohne Gefahr einer Beschädigung von einer Aufnahmefläche der Magnetträgereinrichtung in eine Aufnahmenut des Läuferrohlings verbringen, so dass eine definierte Übergabe ermöglicht werden kann. Die Abstreifbewegung umfasst mehrere funktional hintereinander ablaufende Teilbewegungen, wobei eine erste Teilbewegung eine Aufnahmebewegung des oder der Permanentmagnete bzw. -rohlinge in eine Aufnahmenut des Läuferrohlings und eine letzte Teilbewegung eine Ablösebewegung der aufgenommenen Magnete von der Magnetträgereinrichtung darstellt.

Die erfindungsgemäße Vorrichtung kann insbesondere zur Bestückung zylinderförmiger Läufer mit Permanentmagneten oder -magnetrohlingen eingesetzt werden. Allerdings kann eine erfindungsgemäße Vorrichtung für ähnliche Bestückungsaufgaben, bei denen Permanentmagnete oder -rohlinge in einen Trägerkörper eingesetzt werden sollen, herangezogen werden. Denkbar ist beispielsweise eine Bestückung von längsausgestreckten Linearmotoren oder Schwebetechnikantrieben, bei denen eine linear ausgedehnte Magnetschiene mit Permanentmagneten oder -rohlingen zu bestücken ist. Das rotatorische Element im Bewegungsablauf der Abstreifbewegung kann äußerst gering ausfallen bzw. es kann völlig darauf verzichtet werden, wobei die Abstreifbewegung im Wesentlichen durch die relative translatorische Bewegung ausgeführt werden kann. Wesentlich ist, dass der Permanentmagnet in eine Nut der Schiene bzw. des zu bestückenden Elements eingepasst wird und dies durch eine Zwangsführung von Magnetträgereinrichtung und Elementführungseinrichtung erfolgt.

Gemäß einer vorteilhaften Ausführungsform der Vorrichtung kann die Aufnahmefläche der Magnetträgereinrichtung zweischenklig und im Wesentlichen L-förmig in der Führungsebene ausgebildet sein, wobei ein langer Aufnahmeschenkel der Aufnahmefläche dazu ausgelegt ist, die radiale Außenfläche des zumindest einen Permanentmagneten/Permanentmagnetrohlings abzustützen, und ein kurzer Anschlagschenkel der Aufnahmefläche ausgelegt ist, eine Seitenfläche des zumindest einen Permanentmagneten abzustützen, wobei bevorzugt zumindest der Aufnahmeschenkel der Aufnahmefläche aus ferromagnetischem Material besteht. Eine derartige Ausgestaltung der Aufnahmefläche ermöglicht eine exakte Positionierung eines Permanentmagneten oder Permanentmagnetrohlings im Verlauf der Abstreifbewegung, wobei ein seitliches Verrutschen in eine Richtung der Abstreifbewegung durch den kurzen Anschlagschenkel verhindert wird. Der lange Aufnahmeschenkel stützt den Permanentmagneten in horizontaler Richtung gegenüber dem Läuferrohling ab, wobei durch Ausgestaltung der Aufnahmefläche aus ferromagnetischem Material, insbesondere bei vormagnetisierten Permanentmagneten, eine gewisse kraftschlüssige Verbindung zwischen Permanentmagnet und Magnetträgereinrichtung hergestellt wird, und der Permanentmagnet bis zu einem gewissen Grad bewegungsfixiert ist. Durch die L-förmige Ausgestaltung mittels eines Aufnahmeschenkels und eines Anschlagschenkels wird die Gefahr eines seitlichen Verrutschens eines Permanentmagneten im Laufe der translatorischen und rotatorischen Abstreifbewegung verhindert. Die L-förmige Ausgestaltung ermöglicht eine Anpassung der Magnetträgereinrichtung an Permanentmagnete oder-rohlinge unterschiedlicher Größen und Längen, wobei die Länge lediglich von der Längserstreckungslänge des Aufnahmeschenkels der Aufnahmefläche abhängt.

Gemäß einer vorteilhaften Weiterbildung der Erfindung kann die Aufnahmefläche der Magnetträgereinrichtung Klemmmittel zur klemmenden Fixierung eines oder einer Reihe von hintereinander angeordneten Permanentmagneten umfassen. Die Klemmmittel dienen zur längsseitigen Fixierung des bzw. der Permanentmagnete auf der Aufnahmefläche, so dass zwar eine Querverschiebung der Permanentmagnete in der Führungsebene möglich, jedoch keine Verschiebung in einer Normalrichtung zur Führungsebene möglich ist. Mehrere hintereinander angeordnete Permanentmagnete stoßen sich ab, so dass sich zwischen ihnen auf der Aufnahmefläche ein Versatz einstellen würde. Zur Unterdrückung der Längsabstoßungskräfte spannen die Einklemmmittel die Magnete ein. Weiterhin vorteilhaft kann eine in Längsrichtung der Permanentmagnetorientierung angeordnete Einklemmkante und ein diesbezüglich bevorzugt federnder Gegenklemmhebel zur längsfixierenden Klemmung des bzw. der Reihe von Permanentmagneten (14) umfassen. Die Einspannkante kann im vorderen Bereich der Aufnahmefläche ein Herausrutschen des bzw. der Magnete verhindern, wobei der hintere federnde Einspannhebel eine einstellbare Spannkraft ausübt, um den bzw. die Magnete zu fixieren. Weiterhin vorteilhaft können die Klemmmittel bevorzugt auf dem Aufnahmeschenkel einer zweischenkligen Aufnahmefläche angeordnet sein, und ein den Aufnahmeschenkel umfassender Aufnahmeschenkelträger kann mittels eines oder mehrerer Schnellwechselmittel auswechselbar an der Magnetträgereinrichtung befestigbar sein. Durch Anordnung einer Klemmkante und einer Gegenklemmkante bzw. eines Gegenklemmhebels ist die Aufnahmefläche an eine vorbestimmte Länge eines oder einer Reihe von Permanentmagneten angepasst. Daher ist es vorteilhaft, die Aufnahmefläche, bzw. eine die Klemmmittel umfassenden Aufnahmeschenkel, bzw. den den Aufnahmeschenkel umfassenden Aufnahmeschenkelträger auswechselbar, bevorzugt mittels eines oder mehrerer Schnellwechselmittel wie Schnellverspannungswechselmittel, Klemmverspannung, Aufschiebeverspannung, Schwalbenschwanzführung und Schraubsicherung oder ähnliches auswechselbar an der Magnetträgereinrichtung anzuordnen. Durch die Auswechselbarkeit der Aufnahmefläche kann die Magnetträgereinrichtung einfach und schnell an eine andere Länge des Permanentmagneten bzw. der Länge von Permanentmagneten angepasst werden.

Gemäß einer weiteren vorteilhaften Ausführungsform der Magnetübergabevorrichtung weist die Magnetträgereinrichtung in der Führungsebene benachbart zur Aufnahmefläche, insbesondere benachbart zum Aufnahmeschenkel und gegenüberliegend zum Anschlagschenkel der Aufnahmefläche eine Abstreiffläche auf, die im Wesentlichen aus nichtmagnetischem Material besteht und die dazu dient, ein Ablösen des Permanentmagneten von der Magnetträgereinrichtung zu erleichtern. Dabei erfolgt die translatorische und rotatorische Abstreifbewegung der Läuferführungseinrichtung dergestalt, dass im Verlauf der Abstreifbewegung der zumindest eine Permanentmagnet nach Anschlagen an bzw. Aufnahme in eine Aufnahmenut des Läuferrohlings von der Aufnahmefläche auf die Abstreiffläche seitwärts verschoben werden kann. Somit schlägt diese Ausführungsform vor, insbesondere bei Ausbildung der Aufnahmefläche und bevorzugt bei Ausbildung des Aufnahmeschenkels aus ferromagnetischem Material flächenbenachbart eine Abstreiffläche aus einem nichtmagnetischem Material, insbesondere Kunststoff oder dergleichen, vorzusehen, wobei im Verlauf der translatorischen-rotatorischen Abstreifbewegung der Permanentmagnet zur Ablösung von der Magnetträgereinrichtung auf die Abstreiffläche aus nichtmagnetischem Material verschoben und gegebenenfalls dort abgehoben oder weggedreht werden kann, so dass magnetische Haltekräfte zwischen Magnetträgereinrichtung und Permanentmagnet aufgehoben werden, und der Permanentmagnet insbesondere durch Eigenhaltkräfte zwischen Läuferrohling und Permanentmagneten in der Aufnahmenut des Läuferrohlings gehalten werden kann und entgegen der Schwerkraft von der Magnetträgereinrichtung abgelöst werden kann. Diese Ablösebewegung als letzter Teil der Abstreifbewegung kann beispielsweise eine weitere rotatorische Drehbewegung in eine Drehrichtung des Läuferrohlings entgegengesetzt der Richtung zur Aufnahmefläche sein und kann ausgeführt werden, sobald der Permanentmagnet oder die Permanentmagnetreihe von der Aufnahmefläche auf die Abstreiffläche verschoben worden ist. Somit dient die Abstreiffläche, die sich als Teil eines Abstreifgrundkörpers ausbilden lässt, zur vereinfachten Ablösung des Permanentmagneten von der Magnetträgereinrichtung.

Gemäß einer günstigen Weiterbildung der Magnetübergabevorrichtung und ausgehend von einer zweischenkligen Aufnahmefläche kann der Anschlagschenkel der Aufnahmefläche gegenüber dem Aufnahmeschenkel höhenverschieblich gelagert, insbesondere kippbar oder federnd höhenverstellbar gelagert sein, um im Verlauf der Abstreifbewegung von einem Aufnahmesteg des Läuferrohlings reversibel, insbesondere federreversibel relativ zum Anschlagschenkel höhenverschieblich gelagert werden zu können. Diese Weiterentwicklung schlägt ausgehend von einer Aufnahmefläche, die einen Anschlagwinkel und im Wesentlichen rechtwinklig dazu einen Aufnahmeschenkel aufweist, vor, dass der Anschlagschenkel normal zur Fläche des Aufnahmeschenkels höhenverstellbar oder höhenverschieblich gelagert werden kann, so dass bei der kombinierten translatorischen und rotatorischen Abstreifbewegung des Läuferrohlings über dem auf dem Aufnahmeschenkel gelagerten Permanentmagneten der Anschlagschenkel durch einen Aufnahmesteg des Läuferrohlings normal zur Fläche des Aufnahmeschenkels nach unten verschoben werden kann, so dass der Permanentmagnet vollständig in die Aufnahmenut des Läuferrohlings übergeben werden kann. Somit kann der Anschlagschenkel in beliebiger Höhe gegenüber dem Aufnahmeschenkel eine Seitenfläche eines oder mehrerer in Reihe liegender Permanentmagnete abstützen und im Zuge des Abstreifvorgangs vom Läuferrohling nach unten gedrückt werden, so dass der Permanentmagnet von den beiden Aufnahmestegen einer Aufnahmenut des Läuferrohlings umfasst werden kann, um form- und/oder kraftschlüssig in die Nut des Läuferrohlings verbracht zu werden.

Gemäß einer günstigen Weiterentwicklung der Übergabevorrichtung und ausgehend vom vorangegangenen Ausführungsbeispiel kann der Aufnahmeschenkel in axialer Richtung des Läuferrohlings mehrteilig ausgebildet werden und die einzelnen Aufnahmeschenkelteile können unabhängig voneinander höhenverschieblich bzw. höhenverstellbar gelagert sein. Insbesondere bei axial lang ausgestreckten Läuferrohlingen, die verschiedene Durchmesser an verschiedenen axialen Bereichen aufweisen, kann es vorteilhaft sein, dass eine dementsprechend lang ausgestreckte Magnetträgereinrichtung einen mehrteiligen Aufnahmeschenkel aufweist, der beim Absenken des Läuferrohlings im Zuge der Abstreifbewegung ermöglicht, dass die verschiedenen voneinander unabhängig höhenverstellbaren Aufnahmeschenkel in unterschiedliche Höhenverstellpositionen durch den Läufergrundkörper gedrückt werden können, um einen zuverlässigen Anschlag und eine sichere Übergabe des Permanentmagneten in eine Nut des Läuferrohlings zu ermöglichen.

Gemäß einer günstigen Weiterentwicklung der vorliegenden Erfindung können zumindest eine, bevorzugt zwei oder mehrere, Magnetträgereinrichtungen auf einer Magnetträgertransporteinrichtung auswechselbar nebeneinander und/oder hintereinander benachbart angeordnet werden. Eine solche Magnetträgertransporteinrichtung ermöglicht den Transport einer oder mehrerer Magnetträgereinrichtung im Laufe einer Fließfertigung, wobei beispielsweise die Magnetträgereinrichtung zu einer Magnetbestückungsvorrichtung zum Bestücken der Magnetträgereinrichtung mit Permanentmagneten, zu einer Klebemittelauftragevorrichtung zum Bestreichen einer Fläche eines Permanentmagneten mit Klebemittel und zu einer Magnetübergabevorrichtung verfahren werden kann. Auf dieser Magnetträgertransporteinrichtung können eine, zwei oder mehrere Magnetträgereinrichtungen nebeneinander und/oder hintereinander angeordnet werden. Ein hintereinander Anordnen der Magnetträgereinrichtung ermöglicht eine Skalierung der Länge des Läuferrohlings, so dass insbesondere axial lang ausgedehnte Läuferrohlinge mit einer hohen Anzahl von Permanentmagneten bestückt werden können. Nebeneinander können insbesondere zwei oder mehrere Magnetträgereinrichtungen angeordnet werden, um beispielsweise in einem Arbeitsgang mehrere Nutenreihen zu bestücken, insbesondere einen nordpol- und südpolorientierten Permanentmagneten benachbart auf dem Läuferrohling.. Es ist beispielsweise denkbar, dass zwei oder mehrere Magnetträgereinrichtungen benachbart auf einer Magnetträgertransporteinrichtung angeordnet sind und zunächst mittels einer Magnetbestückungsvorrichtung mit Permanentmagneten/Permanentmagnetrohlingen parallel oder nacheinander bestückt werden, und innerhalb einer Magnetübergabevorrichtung im Zuge einer wiederholten Abstreifbewegung mehrere unterschiedlich polarisierten Permanentmagneten auf einen Läuferrohling in einer Arbeitsstation übergeben werden können.

Gemäß einer günstigen Weiterbildung der vorliegenden Erfindung umfasst die Magnetübergabevorrichtung eine Läufervermessungseinrichtung zur Vermessung, bevorzugt optischen Vermessung der Lageposition des Läuferrohlings für eine definierte Ausrichtung des Läuferrohlings vor Beginn der Abstreifbewegung, wobei die Läufervermessungseinrichtung ausgelegt ist, Lage, Anzahl und Größe der Aufnahmenut zu vermessen, hieraus die Anzahl der zu übergebenden Permanentmagneten zu berechnen und den Läuferrohling in der Läuferführungseinrichtung lagerichtig auszurichten. Zur Ausführung einer Abstreifbewegung der Läuferführungseinrichtung relativ zur Magnetträgereinrichtung ist eine in gewissen Toleranzbereichen variabel definierte Anfangsposition des Läuferrohlings gegenüber dem auf der Magnetträgereinrichtung liegenden Permanentmagneten notwendig. Der Läuferrohling wird im Verlauf der Abstreifbewegung relativ zur Magnetträgereinrichtung zwangsgeführt, wobei im Verlauf der Abstreifbewegung ein kraftgehemmter Rotationsfreilauf ermöglicht ist, damit der Läuferrohling nach Anschlag an die erste Seitenfläche des Magneten sich selbst in eine richtige Lage für eine Abrollbewegung einstellen kann. Hierfür kann vorteilhaft vor Beginn der Abstreifbewegung Lage- und Drehwinkel des Läuferrohlings festgestellt werden, wobei die Läufervermessungseinrichtung zum einen mechanische Lage- und Drehwinkelsensoren umfassen kann, zum anderen optische Vermesssysteme, wie Kamera und Bilderkennungsmittel, um eine lagerichtige Startposition vor Beginn der Abstreifbewegung ermitteln und einstellen zu können. Werden verschiedenartige Läufer, insbesondere verschieden lange Läuferrohlinge in einem Arbeitsgang bestückt, so kann die Läufervermessungseinrichtung dazu dienen, Lage, Anzahl und Größe der Aufnahmenuten des Läuferrohlings zu vermessen, um dementsprechend angepasste Permanentmagnete bereitzustellen, die Anzahl der hintereinander auf der Magnetträgereinrichtung anzuordnenden Permanentmagnete festzulegen und um aus den vorgenannten Parametern einen definierten Anfangswinkel und Anfangsposition des Läuferrohlings vor der Abstreifbewegung einzustellen.

In einem nebengeordneten Aspekt der vorliegenden Erfindung wird ein Verfahren zur Übergabe eines Permanentmagneten oder Permanentmagnetrohlings in eine Aufnahmenut eines Läuferrohlings eines Elektromotors oder -generators unter Verwendung einer Magnetübergabevorrichtung nach einem der vorgenannten Ausführungsformen vorgeschlagen, die die folgenden Schritte umfasst:
- S1-S2: Ausrichten des Läuferrohlings in eine definierbare Aufnahmeposition durch die Läuferführungseinrichtung und/oder Magnetträgereinrichtung;
- S3: Relatives horizontales Verfahren des Läuferrohlings von Richtung Abstreiffläche in Richtung Anschlagschenkel der Magnetträgereinrichtung bis zum Anschlag eines ersten, die Aufnahmenut begrenzenden Aufnahmestegs an eine erste, einer Anschlagseite des Permanentmagneten an dem Anschlagschenkel der Magnetträgereinrichtung gegenüberliegende Seitenfläche des Permanentmagneten;
- S4-S5: Abrollen des Läuferrohlings über den Permanentmagneten bis zum Anschlag eines zweiten, die Aufnahmenut begrenzenden Aufnahmestegs an die an dem Aufnahmeschenkel der Magnetträgereinrichtung anliegende Seitenfläche des Permanentmagneten;
- S6: Absetzen des Läuferrohlings auf dem Permanentmagneten, so dass der Permanentmagnet vollständig in der Aufnahmenut des Läuferrohlings übergeben ist;
- S7: Relatives horizontales Verfahren des Läuferrohlings mit aufgenommenen Permanentmagneten bis zur Abstreiffläche der Magnetträgereinrichtung und Ablösen des Läuferrohlings mit aufgenommenen Permanentmagneten von der Magnetträgereinrichtung.

Mit anderen Worten beschreibt das Verfahren einen translatorischen-rotatorischen Abstreifvorgang des Läuferrohlings, der mittels relativen Bewegungen von Läuferführungseinrichtung und Magnetträgereinrichtung durchgeführt wird und bei dem der Läuferrohling gegenüber den auf der Magnetträgereinrichtung liegenden Magneten derart zwangsgeführt wird, bis eine sichere Übergabe der Magnete in die Aufnahmenut des Läuferrohlings erfolgt ist. Der Läuferrohling kann vorteilhaft einen rotatorisch kraftgehemmten Freilauf aufweisen, um sich nach Anschlag des ersten Anschlagstegs selbst im Verlauf der Abrollbewegung gegenüber dem Permanentmagneten im richtigen Winkel einzustellen. Nachdem eine Reihe von Permanentmagnete in einer Aufnahmenut aufgenommen ist, kann in die benachbarte Aufnahmenut oder eine andere Aufnahmenut eine weitere Reihe von Permanentmagneten gesetzt werden, solange, bis alle Aufnahmenuten des Läuferrohlings mit Permanentmagneten bestückt sind. Die zugrunde liegende Abrollbewegung, deren Beginn durch den Anschlag eines ersten Aufnahmestegs einer Aufnahmenut an eine Seitenfläche des Permanentmagneten, und deren Ende durch Anschlag des benachbarten Aufnahmestegs dieser Nut an die gegenüberliegende Seitenfläche des Permanentmagneten definiert ist, können beschädigungsfrei Permanentmagnete in die Nut des Läuferrohlings übergeben werden, wobei der Ablösevorgang des Permanentmagneten von der Magnetträgereinrichtung durch ein horizontales Verschieben auf eine und/oder durch eine rotatorische Drehbewegung über einer nichtmagnetischen Abstreiffläche unterstützt wird. Die Abstreifbewegung umfasst somit mehrere funktional hintereinander ablaufende Teilbewegungen, wobei eine erste Teilbewegung S2-S6 eine Aufnahmebewegung in Form einer Abrollbewegung des oder der Permanentmagnete bzw. -rohlinge in eine Aufnahmenut des Läuferrohlings und eine letzte Teilbewegung eine Ablösebewegung der aufgenommenen Magnete von der Magnetträgereinrichtung darstellt, die ebenfalls translatorische und/oder rotatorische Bewegungsabläufe umfassen kann.

Das erfindungsgemäße Verfahren kann nicht nur für die Bestückung von zylinderförmigen Läufern, sondern für alle Arten ähnlicher Magnetbestückungsaufgaben eingesetzt werden. Denkbar ist beispielsweise der Einsatz des Verfahrens bei der Bestückung von linear ausgedehnten Magnetschienen von Linearantrieben oder Schwebetechnikantrieben, wobei der rotatorische Bewegungsablauf der Relativbewegung von Magnetträgereinrichtung und Führungseinrichtung gegenüber dem translatorischen Bewegungsablauf der Abstreifbewegung sehr klein ausfallen kann bzw. gar nicht stattfindet.

In einem weiteren nebengeordneten Aspekt betrifft die Erfindung ein System zur Bestückung eines Läuferrohlings eines Elektromotors oder -generators mit Permanentmagneten oder Permanentmagnetrohlingen, umfassend eine Magnetübergabevorrichtung nach einem der vorgenannten Ansprüche, eine Magnetbestückungsvorrichtung und eine Magnetträgerumlaufvorrichtung, wobei die Magnetträgerumlaufvorrichtung ausgelegt ist, zumindest einen, bevorzugt drei Magnetträgereinrichtungen umlaufend an der Magnetbestückungsvorrichtung und der Magnetübergabevorrichtung vorbeizuführen, und in eine jeweilige Arbeitsposition zu verbringen. Die Magnetbestückungsvorrichtung ist ausgelegt, zumindest einen Permanentmagneten/Permanentmagnetrohling auf einer Aufnahmefläche einer Magnetträgereinrichtung abzugeben, insbesondere aufzuschieben, und die Magnetübergabevorrichtung ist ausgelegt, den Permanentmagneten/Permanentmagnetrohling an einen zu bestückenden Läuferrohling zu übergeben.

Das erfindungsgemäße System ermöglicht eine automatisierte Bestückung von Läuferrohlingen mit Permanentmagneten, wobei eine hohe Bestückungsgeschwindigkeit sowie eine gleich bleibende Übergabequalität von Permanentmagnet auf Läuferrohling ohne Gefahr einer Beschädigung des Permanentmagneten erreicht werden kann. Eine Magnetträgereinrichtung, insbesondere eine auf einer Magnettransporteinrichtung angeordnete Magnetträgereinrichtung wird innerhalb einer Magnetträgerumlaufvorrichtung kontinuierlich an einer Magnetbestückungsvorrichtung und an einer Magnetübergabevorrichtung vorbeigeführt. Die Magnetbestückungsvorrichtung übergibt eine oder mehrere Permanentmagnete in Reihe auf zumindest die eine Magnetträgereinrichtung, und an der Magnetübergabevorrichtung wird diese Reihe von Permanentmagneten in die Aufnahmenut eines Läuferrohlings verbracht. Zur definierten Einnahme einer Arbeitsposition an der Magnetbestückungsvorrichtung und der Magnetübergabevorrichtung kann zum einen die Magnetträgerumlaufvorrichtung dergestalt ausgebildet sein, definierte Arbeitspositionsbewegungen auszuführen, oder zum anderen die Magnetbestückungsvorrichtung und/oder Magnetübergabevorrichtung derart ausgestaltet sein, die relative Position von Permanentmagnet und Magnetträgereinrichtung geeignet einzustellen.

Gemäß einer vorteilhaften Weiterbildung des Systems umfasst die Magnetbestückungsvorrichtung zwei oder mehrere Magazine zur Aufnahme von zwei oder mehreren Reihen von Permanentmagneten unterschiedlicher Polarisierung (Nordpol/Südpol), und die Magnettransporteinrichtung umfasst zumindest zwei benachbarte Magnetträgereinrichtungen, die geeignet sind, die entgegengesetzt polarisierten Permanentmagnete aufzunehmen, wobei die Magnetbestückungsvorrichtung ausgelegt sein kann, die beiden Permanentmagnete verschiedener Polarisierung aus den beiden Magazinen auf die Aufnahmefläche der beiden Magnetträgereinrichtungen abzulegen, insbesondere synchronisiert parallel aufzuschieben. Die Magnetbestückungsvorrichtung kann somit zwei oder mehrere Magazine umfassen, in denen Permanentmagnete oder Permanentmagnetrohlinge gestapelt sein können, wobei insbesondere die beiden Magazine zur Aufnahme von nordpol -und südpolorientierten Permanentmagneten dienen. Auf der Magnettransporteinrichtung können zwei oder mehrere Magnetträgereinrichtungen benachbart angeordnet sein, so dass aus einem oder mehreren Magazinen parallel und synchronisiert Permanentmagnete auf die benachbarten Magnetträgereinrichtungen abgelegt werden können, wobei es sich anbietet, bei der Ablage eine lineare Reihe von Permanentmagneten parallel hintereinander und synchronisiert auf die mehreren Magnetträgereinrichtungen aufzuschieben.

Gemäß einer vorteilhaften Weiterbildung des Systems kann eine Klebemittelauftragevorrichtung zur Auftragung eines Klebemittels auf zumindest der der Aufnahmenut des Läuferrohlings zugewandten Radialinnenfläche des zumindest einen Permanentmagneten zwischen Magnetbestückungsvorrichtung und Magnetübergabevorrichtung angeordnet sein, wobei die Klebemittelauftragevorrichtung zumindest einen Klebemittelvorratsbehälter, eine Pumpeneinrichtung und eine Düseneinrichtung zum definierten Auftrag des Klebemittels umfassen kann. Grundsätzlich kann das Klebemittel vor Beginn des Bestückungsvorgangs in den Aufnahmenuten des Läuferrohlings aufgetragen werden, oder auf die dem Läuferrohling zugewandte Seite des Permanentmagneten. Im Rahmen einer Fließfertigung kann zwischen der Magnetbestückungsvorrichtung, die die Permanentmagnete auf die Magnetträgereinrichtung abgelegt und der Magnetübergabevorrichtung, die die Permanentmagnete in die Nuten des Läuferrohlings übergibt, eine Klebemittelauftragevorrichtung angeordnet sein. Die Klebemittelauftragevorrichtung kann dazu dienen, die Radialinnenfläche eines einzelnen Permanentmagneten oder einer linearen Reihe von Permanentmagneten mit Klebemittel zu bestreichen, so dass die bestrichene Oberfläche und/oder Seitenfläche der Permanentmagneten bei Übergabe des Permanentmagneten in die Aufnahmenut des Läuferrohlings ein Verkleben von Permanentmagnet und Läuferrohling ermöglicht. Hierdurch wird eine exakte Dosierung des Klebemittels und eine gleich bleibende Qualität sowie eine verbesserte Haftung von Permanentmagnet und Läuferrohling ermöglicht.

Gemäß einer vorteilhaften Weiterbildung des Systems umfasst die Klebemittelauftragevorrichtung eine visuelle Inspektionseinrichtung zur visuellen Inspektion, Kontrolle und/oder Protokollierung des Klebemittelauftrags, wobei die Inspektionseinrichtung bevorzugt ein Beleuchtungsmittel sowie ein Bilderkennungsmittel zur automatisierten Erfassung des Klebemittelauftrags umfasst. Somit kann beispielsweise während des Klebemittelauftrags oder nach aufgetragenem Klebemittel der Klebemittelwulst mittels einer Kamera aufgenommen und archiviert werden, so dass eine Qualitätskontrolle des Klebemittelauftrags ermöglicht wird. Des Weiteren kann ein Bilderkennungsmittel dazu dienen, bei ungenügendem oder zu hohem Klebemittelauftrag eine Störungsmeldung abzugeben, so dass ein Klebemittelauftrag konstanter Qualität erreicht werden kann.

Gemäß einer weiteren vorteilhaften Weiterbildung des Systems ist die Magnetträgerumlaufvorrichtung im Wesentlichen eine Zweiebenenumlaufvorrichtung, wobei die Magnetträgerumlaufvorrichtung in einer ersten oberen Ebene zumindest eine Magnetträgereinrichtung, bevorzugt angeordnet auf einer Magnetträgertransporteinrichtung entlang von zumindest der Magnetbestückungsvorrichtung und der Magnetübergabevorrichtung vorbei führen und in eine jeweilige Arbeitsposition verbringen kann und in einer zweiten unteren Ebene die Magnetträgereinrichtung umlaufend in eine Anfangsposition führen kann. Durch Ausbildung der Magnetträgerumlaufvorrichtung als Zweiebenenumlaufvorrichtung ist es möglich, dass Gesamtsystem kompakt mit geringer Breite auszuführen, und zumindest eine, bevorzugt drei Magnetträgereinrichtungen, insbesondere Magnetträgereinrichtungen auf Magnetträgertransporteinrichtungen gleichzeitig durch das System laufen zu lassen, um hohe Durchsatzzahlen zu erreichen und ein schnelles Bestücken von Läuferrohlingen in gleichbleibender Qualität zu ermöglichen. Die Magnetträgertransporteinrichtungen können vertikal sowie horizontal linear verfahrbar bewegt werden.

### Zeichnungen

Weitere Vorteile ergeben sich aus der folgenden Zeichnungsbeschreibung. In der Zeichnung sind Ausführungsbeispiele der vorliegenden Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- **Fig. 1**: eine Prinzipdarstellung eines Permanentmagneten, eines Läuferrohlings und einer Aufnahmefläche einer Magnetträgereinrichtung gemäß einer Ausführungsform der vorliegenden Erfindung;
- **Fig. 2**: eine Prinzipskizze eines Abstreifbewegungsvorgangs gemäß eines Ausführungsbeispiels der vorliegenden Erfindung;
- **Fig. 3**: eine Prinzipskizze eines ersten Ausführungsbeispiels einer Magnetträgereinrichtung der vorliegenden Erfindung;
- **Fig. 4**: eine weitere Prinzipskizze des ersten Ausführungsbeispiels einer Magnetübergabevorrichtung mit abgesetztem Läuferrohling;
- **Fig. 5**: eine Prinzipskizze einer Ausführungsform einer Magnetträgertransporteinrichtung mit zwei benachbarten Magnetträgereinrichtungen einer Ausführungsform der vorliegenden Erfindung;
- **Fig. 6**: eine Prinzipskizze einer Ausführungsform eines Magnetbestückungssystems;
- **Fig. 7**: eine dreidimensionale Darstellung einer Ausführungsform eines Magnetbestückungssystems der vorliegenden Erfindung;
- **Fig. 8**: eine detaillierte Darstellung des Magnetbestückungssystems der **Fig. 7**;
- **Fig. 9**: eine Magnetbestückungsvorrichtung eines Magnetbestückungssystems der vorliegenden Erfindung;
- **Fig. 10**: eine Klebemittelauftragevorrichtung eines Magnetbestückungssystems gemäß der vorliegenden Erfindung;
- **Fig. 11**: eine Ausführungsform einer Magnetträgereinrichtung mit einer Reihe von nacheinander angeordneten Permanentmagneten mit Klebemittelauftrag gemäß einer Ausführungsform der vorliegenden Erfindung;

### AUSFÜHRUNGSFORMEN DER ERFINDUNG

In den Figuren sind gleiche oder gleichartige Komponenten mit gleichen Bezugsziffern bezeichnet.

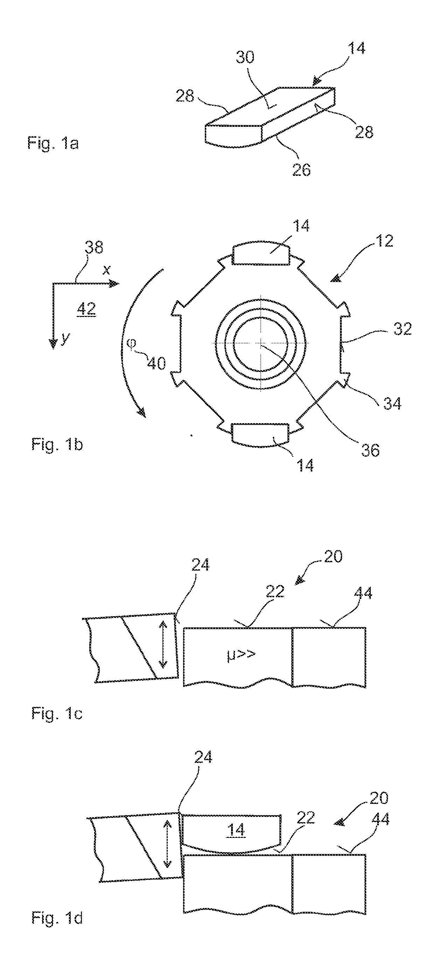

Zur Erläuterung der Erfindung zeige **Figs. 1a** bis **1d** eine Ausführungsform eines Permanentmagneten 14, der mittels einer Magnetübergabevorrichtung in einer Aufnahmenut 32 eines Läuferrohlings 12 aufgenommen werden kann. Der Permanentmagnet 14 weist eine Radialaußenfläche 26 auf, die bei aufgenommenem Permanentmagneten radial nach Außen vom Läufer 12 absteht, und sich an die Feldlinien eines umlaufenden Statormagnetfelds anhängt. Auf der gegenüberliegenden Radialinnenfläche 30 des Permanentmagneten 14 kann eine Klebemittelschicht aufgetragen werden, um den Permanentmagneten 14 in einer Aufnahmenut 32 eines Läuferrohlings 12 einzukleben. Der Permanentmagnet 14 wird an den Längsseiten von Seitenflächen 28 begrenzt, die benachbart von den Aufnahmestegen 34 des Läuferrohlings 12 umfasst werden können.

**Fig. 1b** zeigt ein Profil eines Läuferrohlings 12 in einer X-Y-Führungsebene 42, in der eine translatorische X- und Y-Bewegung mittels eines Linearführungsmittels 38 (nicht dargestellt) einer Läuferführungseinrichtung 18 ausgeführt werden kann. Des Weiteren kann die Läuferführungseinrichtung 18 mit Hilfe eines Drehführungsmittels 40 (ebenfalls nicht dargestellt) eine axiale Drehung ϕ des Läuferrohlings 12 um die Läuferachse 36 durchführen. Am äußeren Umfang des Läuferrohlings 12 sind Aufnahmenuten 32 eingelassen, die durch Aufnahmestege 34 begrenzt sind. Die Dimensionen des Permanentmagneten 14 ist derart ausgelegt, dass er formschlüssig in die Aufnahmenuten 32 eingepasst werden kann. In der Regel ist der Läuferrohling 12 aus ferromagnetischem Material, insbesondere Eisen, Nickel, Kobalt oder einer Legierung/ Mischung davon gefertigt. Sind die Permanentmagnete 14 bereits vorpolarisiert, so haften sie unmittelbar aufgrund ihrer magnetischen Wirkung in den Aufnahmenuten 32 an. Zur Verbesserung der Haftung, insbesondere bei sehr hohen Drehzahlen, kann eine Klebeschicht auf die Radialinnenfläche 30 und/oder den Seitenflächen 28 des Permanentmagneten 14 aufgetragen werden.

**Fig. 1c** zeigt skizzenhaft einen Ausschnitt einer Aufnahmefläche 20 einer Magnetträgereinrichtung 16. Die Aufnahmefläche 20 ist im Wesentlichen L-förmig in der Führungsebene 42 ausgelegt und umfasst einen Aufnahmeschenkel 22, der aus ferromagnetischem Material mit hoher Permeabilitätszahl µ gefertigt ist. Des Weiteren umfasst die Aufnahmefläche 20 einen Anschlagschenkel 24, der in Richtung normal zur Oberfläche des Aufnahmeschenkels 22 verschieblich, insbesondere kippbar, gelagert ist. Der Anschlagschenkel 24 dient zur seitlichen Abstützung eines aufgelegten Permanentmagneten 14, so dass im Zuge der Abstreifbewegung der Permanentmagnet 14 seitlich in Richtung des Anschlagschenkels 24 abgestützt ist. Benachbart und gegenüberliegend des Aufnahmeschenkels 24 ist an dem Aufnahmeschenkel 22 eine Abstreiffläche 44 eines Abstreifkörpers 96 angeordnet, wobei die Abstreiffläche 44 aus nichtmagnetischem Material, dessen Permeabilitätszahl etwa 1 beträgt, ausgearbeitet ist. In **Fig. 1d** ist ein auf der Aufnahmefläche 20 aufgelegter Permanentmagnet 14 dargestellt.

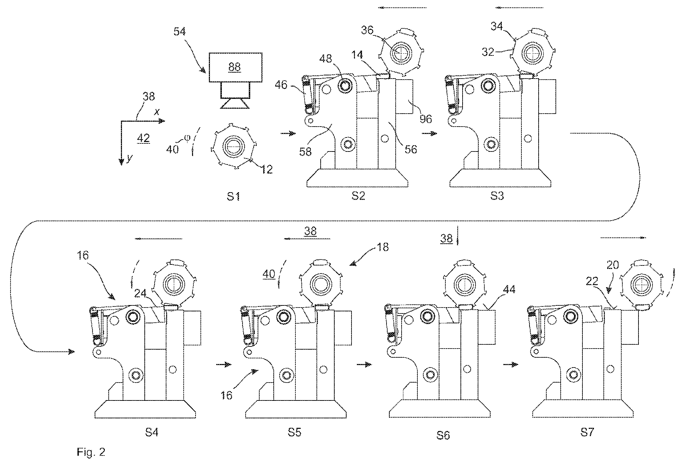

**Fig. 2** zeigt schematisch den Ablauf einer Abstreifbewegung nach einem Ausführungsbeispiel des erfindungsgemäßen Verfahrens. In einem Schritt S1 wird mittels einer Inspektionskamera 88 der Läuferrohling 12 optisch vermessen, die Ausgestaltungen der Aufnahmenuten 32, die Anzahl der Aufnahmestege 34 und die Drehwinkelposition ϕ bestimmt und mittels eines Linearführungsmittels 38 und eines Drehführungsmittels 40 eine vorbestimmte Anfangsposition des Läuferrohlings eingestellt. In Schritt S2 wird eine Magnetträgereinrichtung 16 unter den Läuferrohling 12 angefahren, wobei der Läuferrohling 12 relativ gegenüber der Magnetträgereinrichtung 16 in negativer X-Richtung bewegt wird, solange, bis in Schritt S3 ein Aufnahmesteg 34 einer Aufnahmenut 32 des Läuferrohlings 12 an eine Seitenfläche 28 eines Permanentmagneten 14, der auf der Magnetträgereinrichtung 16 gelagert ist, anstößt. Der Permanentmagnet 14 kann nicht in negativer X-Richtung verschoben werden, da die gegenüberliegende Seitenfläche 28 an dem Anschlagschenkel 24 der Magnetträgereinrichtung 16 anschlägt. Freilauf des Rotors möglich! Im weiteren Verlauf zwischen Schritt S3 bis S5 wird der Läuferrohling 12 über dem Permanentmagneten 14 "abgerollt", wobei ein zweiter Aufnahmesteg 34 den höhenverschieblichen Anschlagschenkel 24 der Magnetträgereinrichtung 16 horizontal nach unten in Y-Richtung bewegt, und in Schritt S5 und S6 der Läuferrohling 12 nach unten abgesenkt wird, so dass der Permanentmagnet 14 vollständig in der Aufnahmenut 32 des Läuferrohlings 12 aufgenommen ist. Schließlich wird der Permanentmagnet 14, der in der Aufnahmenut 32 des Läuferrohlings 12 aufgenommen ist, in Schritt S7 durch eine Horizontalbewegung in X-Richtung vom Anschlagschenkel 24 hin zur Abstreiffläche 44 des Abstreifkörpers 96 von der Magnetträgereinrichtung 16 bewegt und durch den Läuferrohling 12 von der Magnetträgereinrichtung 16 abgelöst. Diese Ablösebewegung kann vorteilhaft durch eine weitere rotatorische Drehbewegung, wie durch einen Rotationspfeil gekennzeichnet, unterstützt werden, oder alleinig in einer solchen Rotationsbewegung bestehen. Während des gesamten Ablaufs erfolgt eine teilweise Zwangsführung sowohl des Permanentmagneten 14 als auch des Läuferrohlings 12, so dass in einer koordinierten translatorischen und rotatorischen Abstreifbewegung von Läuferrohling 12 und Permanentmagnet 14 der Permanentmagnet 14 in die Aufnahmenut 32 durch eine Rollbewegung aufgenommen und durch eine Schiebebewegung und/oder kombinierte Rollbewegung von der Magnetträgereinrichtung 16 abgelöst werden kann. Die Abstreifbewegung umfasst mehrere funktional hintereinander ablaufende Teilbewegungen, wobei eine erste Teilbewegung S2-S6 eine Aufnahmebewegung in Form einer Abrollbewegung des oder der Permanentmagnete bzw. -rohlinge 14 in eine Aufnahmenut 32 des Läuferrohlings 12 und eine letzte Teilbewegung S7 eine Ablösebewegung der aufgenommenen Magnete 14 von der Magnetträgereinrichtung 16 darstellt, die ebenfalls translatorische und/oder rotatorische Bewegungsabläufe umfassen kann.

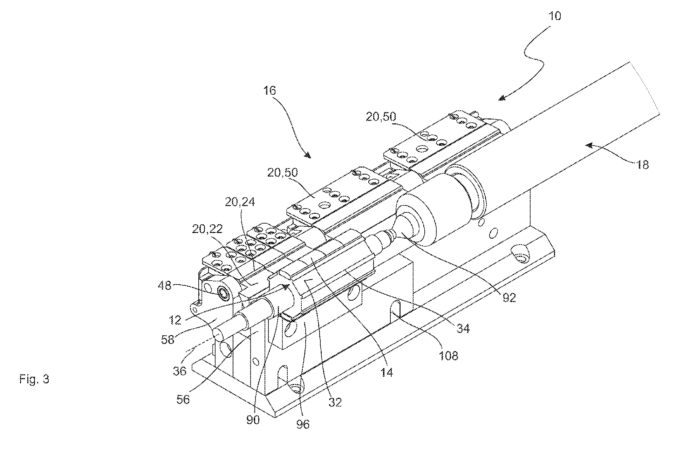

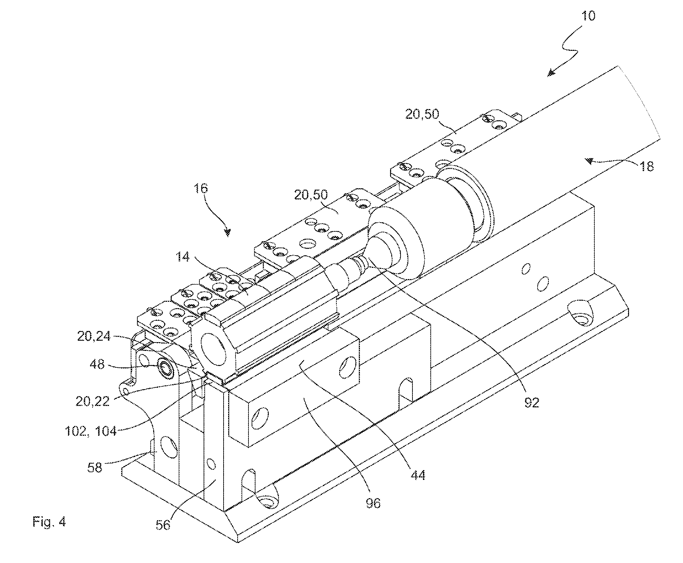

In den **Figs. 3** bis **5** werden in skizzenhaften dreidimensionalen Darstellungen Ausführungsbeispiele einer Magnetträgereinrichtung 16 sowie einer Magnettransporteinrichtung 52 abgebildet. Die **Figs. 3** und **4** zeigen eine Ausführungsform einer Magnetübergabevorrichtung 10, in der mittels einer Läuferführungseinrichtung 18 ein Läuferrohling 12 über eine Aufnahmefläche 20 einer Magnetträgereinrichtung 16 abgestreift werden kann, so dass ein Permanentmagnet 14 von der Aufnahmefläche 20 der Magnetträgereinrichtung 16 in eine Aufnahmenut 32 des Läuferrohlings 12 aufgenommen werden kann.

In **Fig. 3** ist ein Läuferrohling 12 mittels eines Spindeldorns 92 und einer Pinole 90 in eine Läuferführungseinrichtung 18 eingespannt, die eine translatorische und eine rotatorische Bewegung des Läuferrohlings 12 durchführen kann. Der Läuferrohling 12 weist Aufnahmenuten 32 auf, wobei in einer Aufnahmenut 32 bereits vier hintereinander angeordnete Permanentmagnete 14 aufgenommen sind. Auf einer Magnetträgereinrichtung 16 befinden sich eine weitere Reihe von vier Permanentmagneten 14 auf einer Aufnahmefläche 20, die im Wesentlichen L-förmig ausgebildet ist und einen Aufnahmeschenkel 22 und einen Anschlagschenkel 24 aufweist. Die Magnetträgereinrichtung 16 umfasst einen Anschlagschenkelträger 58, der den Anschlagschenkel 24 und eine Wippmechanik trägt, die ein Kipplager 48 und Federmittel 46, insbesondere Spiralfedern, umfasst, um einzelne Bereiche 50 von Anschlagschenkeln 24 unterschiedlich weit hinab wippen und horizontal gegenüber dem Aufnahmeschenkel 22 vertikal verfahren zu können. Des Weiteren umfasst die Magnetträgereinrichtung 16 einen Aufnahmeschenkelträger 56, der den Aufnahmeschenkel 22 trägt. Benachbart zum Aufnahmeschenkel 22 und gegenüberliegend zum Anschlagschenkeln 24 ist ein Abstreifkörper 96 am Aufnahmeschenkelträger 56 angeordnet, der eine Abstreiffläche 44 aufweist, die aus nichtmagnetischem Material besteht und die dazu dient, das Ablösen der Reihe von Permanentmagneten 14, die bereits in der Aufnahmenut 32 eines Läuferrohlings 12 aufgenommen sind, von der Magnetträgereinrichtung 16 zu vereinfachen. Der Aufnahmeschenkel 22 des Aufnahmeschenkelträgers 56 umfasst Klemmmittel 102, die im vorderen Bereich eine Klemmkante 104 und im hinteren Bereich (nicht dargestellt) einen federnden Gegenklemmhebel 106 umfasst, der eine Reihe hintereinander aufgenommener Permanentmagnete 14 einklemmen kann, um gegenseitige Abstoßungskräfte zu unterbinden und die Permanentmagnete 14 in Längsrichtung zu fixieren. Hierdurch ist der Aufnahmeschenkel 22 zur Aufnahme einer Reihe von Magneten vorbestimmter Länge eingerichtet. Sollen Läufer mit längeren oder kürzeren Magneten 14 bestückt werden, so ist der Aufnahmeschenkelträger 56 auszuwechseln; hierzu kann dieser durch Lösen von Schnellwechselmittel 108, beispielsweise von Schraubenverbindungen und durch Abziehen aus Aufschiebeschienen an der Magnetträgereinrichtung 16 ausgewechselt werden.

In **Fig. 4** ist im Fortschritt zur **Fig. 3** der Läuferrohling auf der Aufnahmefläche 20 der Magnetträgereinrichtung 16 mittels der Läuferführungseinrichtung 18 abgesetzt, wobei die verschiedenen Teile 50 der Anschlagschenkel 24 je nach Außendurchmesser des Läuferrohlings 12 und der Läuferführungseinrichtung 18 unterschiedlich weit gegenüber dem Aufnahmeschenkel 22 abgesenkt sind. Deutlich sichtbar sind die Klemmkante 104 und der federnde Gegenklemmhebel 106, die auf dem Aufnahmeschenkel 22 des Aufnahmeschenkelträgers 56 zur klemmenden Aufnahme von Permanentmagneten 14 angeordnet sind. Der Aufnahmeschenkelträger 56 kann durch Lösen von Schnellwechselmittel 108 an der Magnetträgereinrichtung 16 ausgewechselt werden.

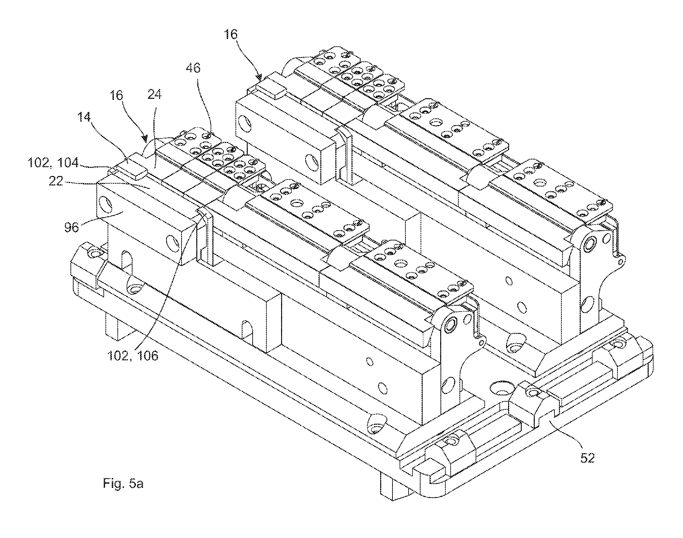

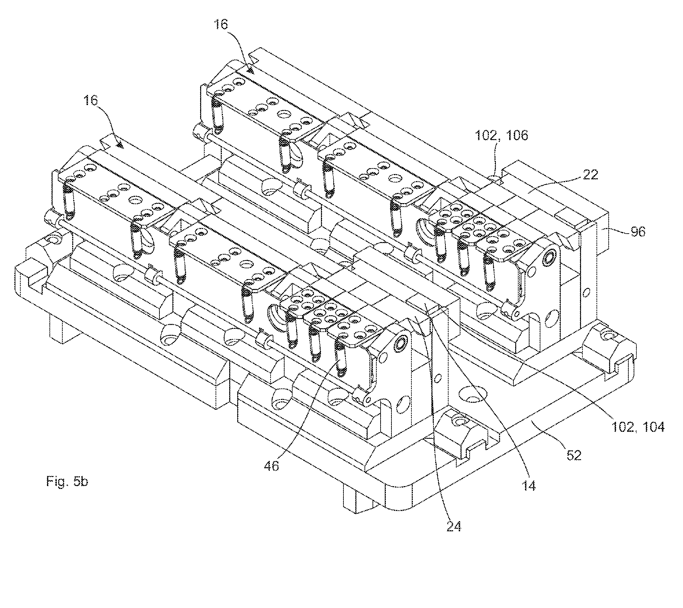

**Fig. 5** zeigt perspektivisch eine Magnetträgertransporteinrichtung 52, auf der zwei benachbarte Magnetträgereinrichtungen 16 angeordnet sind, wobei **Fig. 5a** eine Hinter- und **Fig. 5b** eine Vorderansicht der Magnetträgertransporteinrichtung 52 darstellt. Mittels einer solchen Magnetträgertransporteinrichtung 52 lassen sich zwei entgegengesetzt polarisierte Reihen von Permanentmagneten 14 gleichzeitig bestücken, und die Magnetübergabevorrichtung 52 kann hintereinander zwei bevorzugt benachbarte Aufnahmenuten eines Läuferrohlings mit entgegengesetzt polarisierten Permanentmagneten 14 bestücken, wodurch die Bestückungsgeschwindigkeit erhöht werden kann. Die L-förmige Aufnahmefläche 20 umfasst einen Anschlagschenkel 24 und einen Aufnahmeschenkel 22, wobei der Anschlagschenkel 24 mittels Federn 46 gegenüber den Aufnahmeschenkel 22 absenkbar ist. Der Aufnahmeschenkel 22 umfasst im vorderen Bereich eine Klemmkante 104 und hierzu funktionskomplementär im hinteren Beeich einen federnden Gegenklemmhebel 106, die dazu dienen, eine Reihe hintereinander auf dem Aufnahmeschenkel 22 angeordnete Permanentmagnete 14 einzuklemmen, um diese in Längsrichtung zu fixieren und eine gegenseitige Abstoßung der Magnete 14 zu verhindern. Nach Aufnahme der Magnetreihe 14 in eine Nut 32 eines Läufers 12 treten die Abstoßungskräfte kaum in Erscheinung, da der magnetische Fluss größtenteils durch den Läuferrohling geleitet wird und außerdem der magnetische Fluss nach erfolgter Bestückung magnetisch mittels Kurzschlusselementen kurzgeschlossen werden kann.

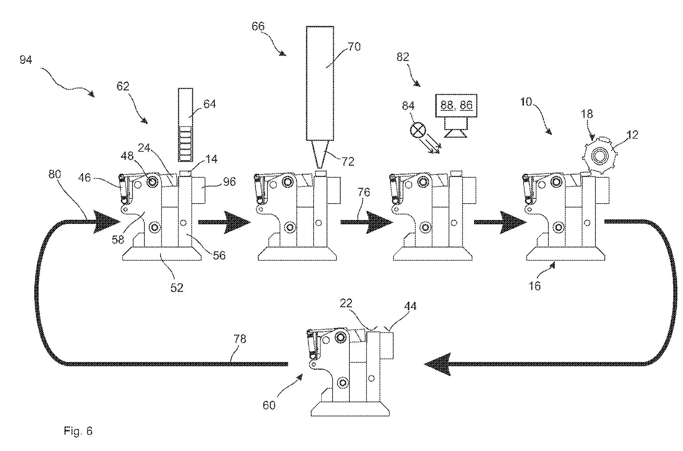

**Fig. 6** zeigt ein erstes Ausführungsbeispiel eines Magnetbestückungssystems 94, das eine Magnetbestückungsvorrichtung 62, eine Klebemittelauftragevorrichtung 66, eine Inspektionseinrichtung 82, eine Magnetübergabevorrichtung 10 sowie eine Magnetträgerumlaufvorrichtung 60 umfasst. In einem ersten Schritt wird eine Magnetträgereinrichtung 16, die auf einer Magnettransporteinrichtung 52 angeordnet ist, in einer Startposition unterhalb der Magnetbestückungsvorrichtung 62 angeordnet. Die Magnetbestückungsvorrichtung 62 umfasst ein Permanentmagnetmagazin 64, aus dem einzelne Permanentmagnete 14 auf einem Aufnahmenschenkel 22 einer Aufnahmefläche 20 der Magnetträgereinrichtung 16 abgelegt werden können. Vorteilhaft umfasst die Magnetbestückungsvorrichtung 62 zwei Magazine 64, aus denen Magnete 14 entgegengesetzter Polarisierung gleichzeitig entnommen werden können. Am unteren Ende eines Permanentmagnetmagazins 64 befindet sich eine Vereinzelungseinrichtung, aus der einzelne Magnete aus dem Magazinen 64 entnommen und auf einem Aufnahmeschenkel 22 der Magnetträgereinrichtung 16 abgelegt werden können. Die Magneten 14 können in Stangen von oben in das Magazin 64 eingebracht werden, die Vereinzelung erfolgt von unten und wird gleichzeitig bei zwei benachbarten Magazinen 64 vorgenommen. Der Vereinzelungshub kann so gewählt werden, dass die Permanentmagnete 14 von einer Vereinzelungsschiene auf die Magnetträgereinrichtung 16 geschoben werden können. Nach Beendigung eines Rückwärtshubs der Vereinzelungseinrichtung wird das Magnetmagazin 64 durch die Magnetkraft nach unten gezogen und ein weiterer Bestückungsvorgang kann gestartet werden, bis eine vorbestimmbare Anzahl von Permanentmagneten 14 hintereinander benachbart auf dem Aufnahmeschenkel 22 der Magnetträgereinrichtung 16 abgelegt sind.

Danach wird die Magnettransporteinrichtung 52 mittels der Magnetträgerumlaufvorrichtung 60 unterhalb der Klebemittelauftragevorrichtung 66 positioniert. Diese umfasst einen Klebemittelvorratsbehälter 70, eine Düseneinrichtung 72 und eine Klebemittelpumpe (nicht dargestellt). Ein Klebemittel 68 wird durch die Pumpe in feinsten Mengen gezielt und tropfenfrei auf der dem Läuferrohling zugewandten Seite 30 des Permanentmagneten 14 aufgetragen. Dabei wird die Düseneinrichtung 72 in axialer Richtung entlang der Radialinnenfläche 30 des Permanentmagneten 14 bewegt, so dass ein dosierter Wulst von Klebemittel auf den Permanentmagneten 14 aufgetragen werden kann. Entsprechend der verschiedenen Motor- oder Generatortypen und Größe der Permanentmagnete 14 kann die Menge des Klebemittels 68 und die Geschwindigkeit gewählt werden. Anschließend wird die Magnettransporteinrichtung 52 zu einer Inspektionseinrichtung 82 weiterbewegt, die jedoch auch in der Klebemittauftragevorrichtung 66 integriert sein kann. Die Inspektionseinrichtung 82 umfasst eine Inspektionskamera 88, die mit einem Bilderkennungsmittel 86 verbunden sein kann, sowie eine Beleuchtungseinrichtung 84. Nach Auftragen einer Wulst von Klebemittel 68 wird die Klebemittelwulst mittels der Inspektionseinrichtung 82 inspiziert und archiviert, so dass eine Protokollierung und Qualitätskontrolle der Klebemittelauftragung erfolgen kann. Zur Verbesserung der Inspektionsgenauigkeit kann ein Beleuchtungsmittel 84 die klebemittelbeauftragte Oberfläche 30 des Permanentmagneten 14 beleuchten. Mittels des Bilderkennungsmittels 86 kann ein Soll/Ist-Vergleich durchgeführt werden, wobei fehlerhafte Klebemittelaufträge automatisch aufgefunden und als Ausschuss gemeldet werden können.

Anschließend wird die Magnettransporteinrichtung 52 zu einer Magnetübergabevorrichtung 10 geführt, die mittels einer kombinierten translatorischen und rotatorischen Abstreifbewegung die Reihe von Permanentmagneten 14 in Läufernuten 32 eines Läuferrohlings 12 übergibt. Hierbei kann die Magnettransporteinrichtung 16 angehoben werden, und der Läuferrohling 12 in eine Anfangsposition mittels einer Läufervermessungseinrichtung 54 (nicht dargestellt) verfahren werden. Die Übergabe der Permanentmagnete 14 von der Magnetträgereinrichtung 16 auf den Läuferrohling 12 wird durch eine Kombination der translatorischen und rotatorischen Bewegungsabläufe sichergestellt, wobei die Permanentmagnete 14 und der Läuferrohling 12 solange zwangsgeführt werden, bis eine sichere Übergabe erfolgt ist. Der Vorgang kann mit einer zweiten und weiteren Reihe von Permanentmagneten (Nordpol/Südpol) wiederholt werden, bis der Läufer 12 vollständig bestückt ist. Die Position der zweiten Aufnahmenut 32 und der Magnetfläche der zweiten Reihe von Permanentmagneten 14 kann rechnerisch ermittelt werden. Sind beide polarisierten Reihen von Permanentmagneten 14 gesetzt, kann die Magnetträgereinrichtung 16 wieder zurück auf die Magnettransporteinrichtung 52 gesetzt werden und mittels der Magnetträgerumlaufvorrichtung 60 zurück in die Anfangsposition verfahren werden.

Der vorgenannte Vorgang wird solange wiederholt, bis alle Reihen von Permanentmagneten des Läuferrohlings 12 gesetzt sind. Ist der Läufer 12 fertig bestückt, kann die Läuferführungseinrichtung 18 in eine Entnahmeposition verfahren werden, bei der die Einspannmittel (Pinole 90, Spindeldorn 92) gelöst werden können und der fertig bestückte Läufer 12 aus dem Magnetbestückungssystem 94 entnommen werden kann. Die Magnetträgereinrichtung 16 ist derart ausgestaltet, dass sie verschieden große Permanentmagnete 14 mit verschiedenen Längen aufnehmen kann. Es können zwei oder mehrere Magnetträgereinrichtungen 16 hintereinander angeordnet werden, um unterschiedlich lange Permanentmagnete 14 aufnehmen zu können. Dabei können Läuferdurchmesser von 10 bis 160 mm mit Bestückungslängen von 5 bis 300 mm erreicht werden. Die einzelnen Permanentmagnete 14 können Längen von 3 bis 40 mm erreichen. Des Weiteren ist eine Bestückung von Hohlwellenläufern ebenfalls möglich. Das Magnetbestückungssystem 94 kann vorteilhafterweise durch eine Steuer- und Bedienvorrichtung 98, insbesondere durch eine rechnergesteuerte Vorrichtung, bedient werden, wobei verschiedene Sensoren die jeweilige Lage verschiedener Komponenten erkennen und Steuerbefehle an einzelne Aktoren aussenden können, um einen reibungslosen und schnellen Ablauf der Läuferbestückung zu gewährleisten.

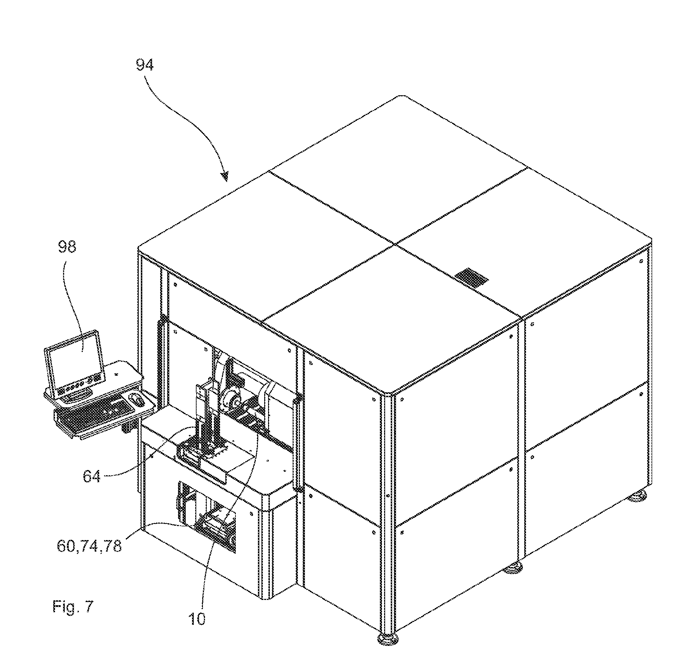

**Fig. 7** zeigt eine Ausführungsform eines Magnetbestückungssystems 94 mit geschlossenem Gehäuse, bei dem lediglich eine Steuer- und Bedienvorrichtung 98 sowie Permanentmagnetmagazine 64 zum Nachfüllen durch einen Bediener erreichbar sind. Des Weiteren ist die Magnetübergabevorrichtung 10 ebenfalls durch einen Bediener erreichbar, um einen Läuferrohling 12 einzusetzen bzw. einen fertig bestückten Läufer 12 entnehmen zu können. Die Magnetträgerumlaufvorrichtung 60 ist als Zweiebenenumlaufvorrichtung 74 mit einer oberen Umlaufebene 76 und einer unteren Umlaufebene 78 ausgestaltet, um das Gesamtsystem 94 möglichst kompakt bauen zu können.

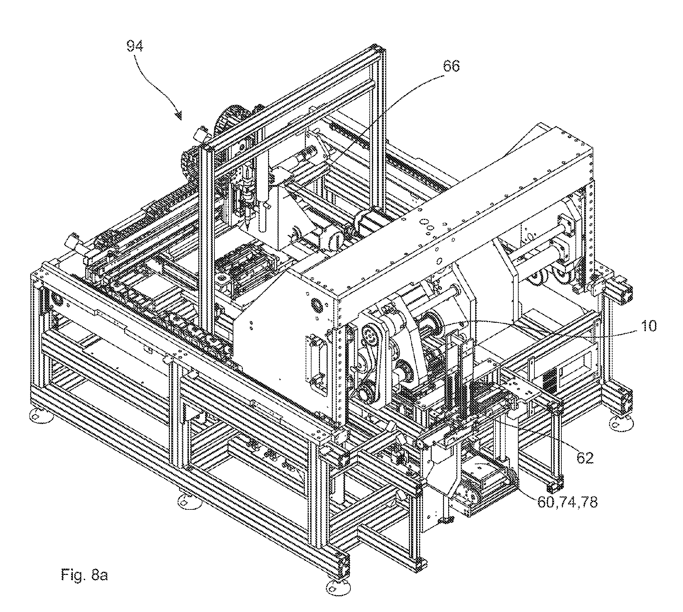

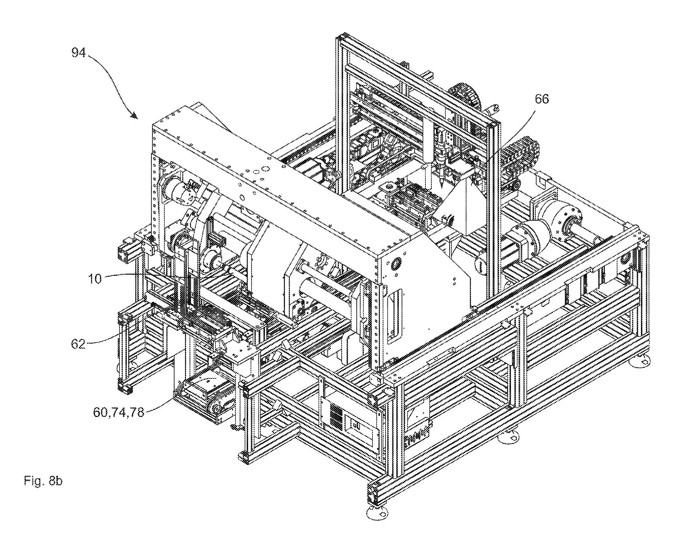

**Figs. 8a** und **8b** zeigen das in **Fig. 7** dargestellte Magnetbestückungssystem 94 im Detail ohne Gehäuse in zwei gedrehten perspektivischen Ansichten, bei dem Magnetübergabevorrichtung 10, Magnetbestückungsvorrichtung 62, Zweiebenenumlaufvorrichtung 74 der Magnetträgerumlaufvorrichtung 60 sowie Klebemittelauftragevorrichtung 66 erkennbar sind. Das Gesamtsystem 94 ist kompakt und für hohe Durchlaufgeschwindigkeiten sowie hohe Qualität der Permanentmagnetbestückung eines Läufers optimiert.

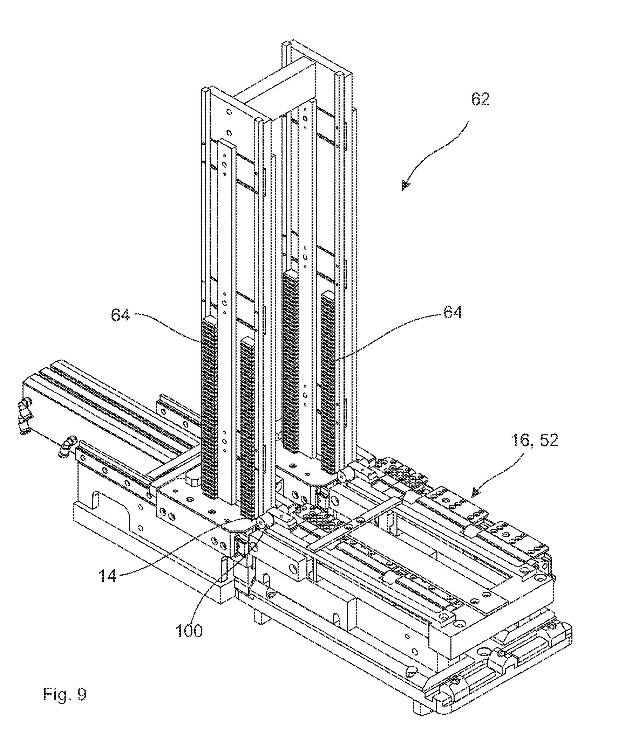

**Fig. 9** zeigt im Detail eine Ausführungsform einer Magnetbestückungsvorrichtung 62, in der zwei Permanentmagnetmagazine 64 mit Reihen von nordpol- bzw. südpolorientierten Permanentmagneten 14 umfasst sind. Am unteren Ende der Magazine 64 werden mittels einer Vereinzelungseinrichtung einzelne Magnete 14 aus den Magazinen 64 entnommen und auf Aufnahmeschenkel 22 der Magnetträgereinrichtung 16 geschoben, wobei zwei benachbarte Magnetträgereinrichtungen 16 auf einer Magnetträgertransporteinrichtung 52 angeordnet sind.

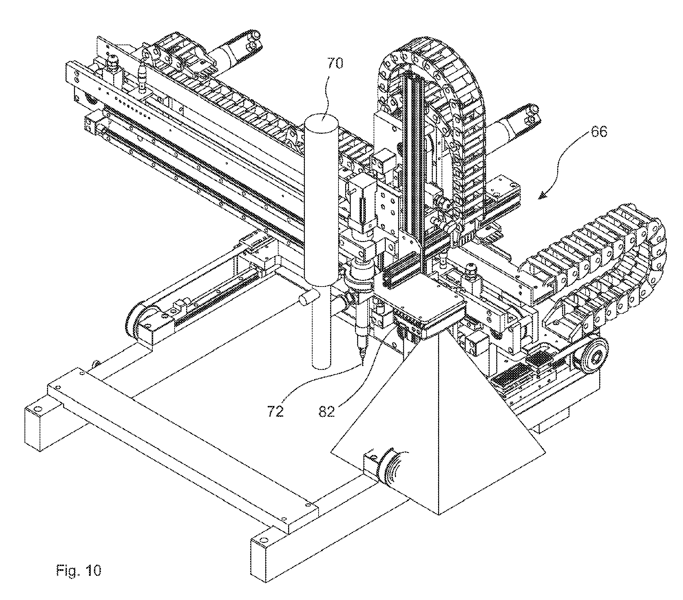

**Fig. 10** stellt eine Ausführungsform einer Klebemittelauftragevorrichtung 66 mit integrierter Inspektionseinrichtung 82 dar, wobei die Klebemittauftragevorrichtung 66 einen Klebemittelvorratsbehälter 70 sowie eine Düseneinrichtung 72 umfasst, und in X-, Y- und Z-Richtung verfahrbar ist, um einen fein dosierten Wulst aus Klebemittel 68 auf eine dem Läuferrohling 12 zugewandte Oberfläche 30 einer Reihe von Permanentmagneten 14 aufzubringen, die hiernach mit der Inspektionseinrichtung 82 inspiziert werden kann, um die Qualität des Klebemittelauftrags zu protokollieren und zu überwachen.

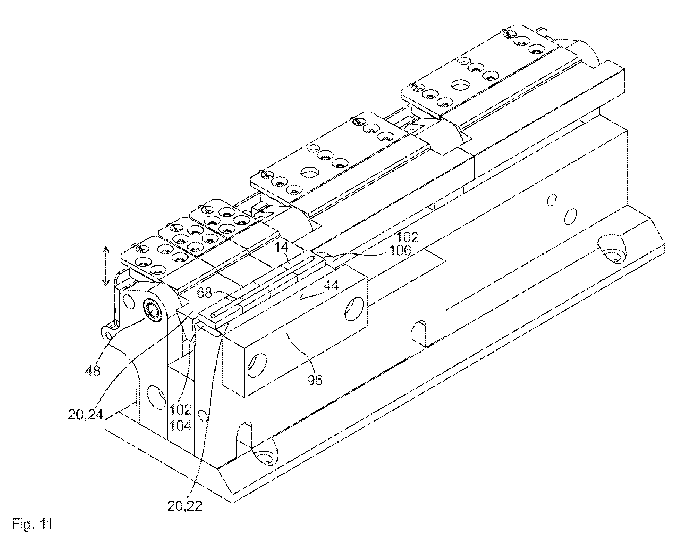

Schließlich zeigt **Fig. 11** in einer vergrößerten Zeichnung einen Teilausschnitt einer Magnetträgereinrichtung 16, die eine Aufnahmefläche 20 umfasst, wobei die Aufnahmefläche 20 im Wesentlichen L-förmig ausgestaltet ist, und einen Aufnahmeschenkel 22 und einen Anschlagschenkel 24 umfasst. Der Anschlagschenkel 24 ist über eine Wippmechanik, die ein Kipplager 48 und nicht dargestellte Federmittel 46 umfasst, kippbar, wobei der Anschlagschenkel 24 mehrteilig ausgeführt ist, um verschieden starke Absenkungen einzelner Bereiche des Anschlagschenkels 24 gegenüber dem Aufnahmeschenkel 22 zu ermöglichen. Auf dem Aufnahmeschenkel 22 ist eine Reihe von vier Permanentmagneten 14 hintereinander abgelegt und mit einem Wulst von Klebemittel 68 beaufschlagt. Benachbart zum Aufnahmeschenkel 24 ist ein Abstreifkörper 96 angeordnet, wobei mittels einer translatorischen Bewegung einer Läuferführungseinrichtung 18 die Reihe von Permanentmagneten 14, die in eine Aufnahmenut 32 eines Läuferrohlings 12 aufnehmbar ist, auf die Abstreiffläche 44 des Abstreifkörpers 96 verschoben werden kann, um die Permanentmagnete 14 von der Magnetträgereinrichtung 16 zu trennen. Der Aufnahmeschenkel 22 weist im vorderen Bereich eine Klemmkante 104 und im hinteren Bereich einen federnden Gegenklemmhebel 106 auf, die die Reihe von Permanentmagneten 14 in Längsrichtung einklemmen, um die magnetischen Abstoßungskräfte zu kompensieren und die Permanentmagnete 14 auf der Magnetträgereinrichtung 14 zu fixieren.

Die Erfindung erlaubt die Vereinfachung der Handhabung bei der Bestückung von Läuferrohlingen mit Neodym-Magneten, wobei auch andere Bestückungsaufgaben deutlich vereinfacht werden können. Es können Läuferrohlinge verschiedenster Baugrößen und Durchmesser bestückt und der Bestückungsvorgang automatisiert überwacht werden. Die Bestückungszeit eines vollständigen Läufers beträgt nur 2 bis 6 Minuten in Abhängigkeit vom Läufertyp. Es muss lediglich ein Bediener des Magnetbestückungssystems eingesetzt werden, der lediglich zur Aufnahme und Entnahme des Läuferrohlings sowie zur Auffüllung der Permanentmagnetmagazine tätig werden muss. Die Erfindung eignet sich für vergleichbare Übergabeaufgaben für magnetische Werkstoffe, wobei die Magnetträgereinrichtung und die Läuferführungseinrichtung entsprechend angepasst werden können.

### Bezugszeichenliste

- 10: Magnetübergabevorrichtung
- 12: Läuferrohling
- 14: Permanentmagnet
- 16: Magnetträgereinrichtung
- 18: Läuferführungseinrichtung
- 20: Aufnahmefläche
- 22: Aufnahmeschenkel
- 24: Anschlagschenkel
- 26: Radialaußenfläche eines Permanentmagneten
- 28: Seitenfläche eines Permanentmagneten
- 30: Radialinnenfläche eines Permanentmagneten
- 32: Aufnahmenut
- 34: Aufnahmesteg
- 36: Läuferachse
- 38: Linearführungsmittel
- 40: Drehführungsmittel
- 42: Führungsebene
- 44: Abstreiffläche
- 46: Federmittel
- 48: Kipplager
- 50: Aufnahmeschenkelteile
- 52: Magnetträgertransporteinrichtung
- 54: Läufervermessungseinrichtung
- 56: Aufnahmeschenkelträger
- 58: Anschlagschenkelträger
- 60: Magnetträgerumlaufvorrichtung
- 62: Magnetbestückungsvorrichtung
- 64: Permanentmagnetmagazin
- 66: Klebemittelauftragevorrichtung
- 68: Klebemittel
- 70: Klebemittelvorratsbehälter
- 72: Düseneinrichtung
- 74: Zweiebenenumlaufvorrichtung
- 76: Obere Umlaufebene
- 78: Untere Umlaufebene
- 80: Anfangsposition
- 82: Inspektionseinrichtung
- 84: Beleuchtungsmittel
- 86: Bilderkennungsmittel
- 88: Inspektionskamera
- 90: Pinole
- 92: Spindeldorn
- 94: Magnetbestückungssystem
- 96: Abstreifkörper
- 98: Steuer- und Bedienvorrichtung
- 100: Magnetvereinzelungseinrichtung
- 102: Klemmmittel
- 104: Klemmkante
- 106: Gegenklemmkante
- 108: Schnellwechselmittel des Aufnahmeschenkelträgers

## Patentansprüche

1. Magnetübergabevorrichtung (10) für die Magnetbestückung eines Läuferrohlings (12) eines Elektromotors oder -generators mit Permanentmagneten (14) oder Permanentmagnetrohlingen, umfassend eine Magnetträgereinrichtung (16) und eine Läuferführungseinrichtung (18), wobei die Magnetträgereinrichtung (16) eine mehrteilige Aufnahmefläche (20) zur Aufnahme und definierten Lagerung zumindest eines Permanentmagneten/Permanentmagnetrohlings (14) umfasst, und die Läuferführungseinrichtung (18) Einspannmittel zum Einspannen eines mit Magnetaufnahmenuten (32) versehenen Läuferrohlings (12), Linearführungsmittel (38) zur linearen Führung des Läuferrohlings (12) in einer normal zur Läuferachse (36) stehenden Führungsebene (42) und Drehführungsmittel (40) zur axialen Drehung des Läufers umfasst, wobei die Vorrichtung (10) ausgelegt ist, zumindest den einen Permanentmagneten (14) durch eine kombinierte translatorische und rotatorische Abstreifbewegung der Läuferführungseinrichtung (18) und/oder der Magnetträgereinrichtung (16) von der Aufnahmefläche (20) der Magnetträgereinrichtung (16) in eine Aufnahmenut (32) des Läuferrohlings (12) zu übergeben.

2. Vorrichtung nach Anspruch 1 ,
wobei die Aufnahmefläche (20) der Magnetträgereinrichtung (16) zweischenklig im Wesentlichen L-förmig in der Führungsebene (42) ausgebildet ist, wobei ein langer Aufnahmeschenkel (22) der Aufnahmefläche (20) ausgelegt ist, die Radialaußenfläche (26) des zumindest einen Permanentmagneten (14) abzustützen und ein kurzer Anschlagschenkel (24) der Aufnahmefläche (20) ausgelegt ist, eine Seitenfläche (28) des zumindest einen Permanentmagneten (14) abzustützen, wobei bevorzugt zumindest der Aufnahmeschenkel (22) der Aufnahmefläche (20) aus ferromagnetischem Material besteht.

3. Vorrichtung nach Anspruch 1 oder 2,
wobei die Aufnahmefläche (20) der Magnetträgereinrichtung (16) Klemmmittel (102) zur klemmenden Fixierung eines oder einer Reihe von hintereinander angeordneten Permanentmagneten (14) umfasst, insbesondere eine in Längsrichtung der Permanentmagnetorientierung angeordnete Einspannkante (104) und ein diesbezüglich bevorzugt federnder Gegenklemmhebel (106) zur längsfixierenden Feststellung des bzw. der Reihe von Permanentmagneten (14) umfasst, wobei die Klemmmittel (102) bevorzugt auf dem Aufnahmeschenkel (22) einer zweischenkligen Aufnahmefläche (20) angeordnet sind, und wobei ein den Aufnahmeschenkel (22) umfassender Aufnahmeschenkelträger (56) mittels eines oder mehrerer Schnellwechselmittel (108) auswechselbar an der Magnetträgereinrichtung (16) befestigbar ist.

4. Vorrichtung nach einem der vorangegangenen Ansprüche,
wobei die Magnetträgereinrichtung (16) in der Führungsebene (42) des Weiteren benachbart zur Aufnahmefläche (20), insbesondere benachbart zum Aufnahmeschenkel (22) und gegenüberliegend zum Anschlagschenkel (24) eine Abstreiffläche (44) aus im Wesentlichen nichtmagnetischem Material umfasst, wobei das Linearführungsmittel (38) der Läuferführungseinrichtung (18) im Verlauf der Abstreifbewegung den zumindest einen Permanentmagneten (14) nach Anschlagen an eine Aufnahmenut (32) des Läuferrohlings (12) von der Aufnahmefläche (20), insbesondere von dem Aufnahmeschenkel (22), auf die Abstreiffläche (44) verschieben kann.

5. Vorrichtung nach einem der Ansprüche 2 bis 4,
wobei der Anschlagschenkel (24) der Aufnahmefläche (20) gegenüber dem Aufnahmeschenkel (22) höhenverschieblich gelagert, insbesondere kippbar gelagert ist, und im Verlauf der Abstreifbewegung von einem Aufnahmesteg (34) des Läuferrohlings (12) reversibel, insbesondere federreversibel, relativ zum Anschlagschenkel (24) höhenverschoben werden kann.

6. Vorrichtung nach Anspruch 5,
wobei der Aufnahmeschenkel (22) in axialer Richtung des Läuferrohlings (12) mehrteilig ausgebildet ist und die einzelnen Aufnahmeschenkelteile (50) unabhängig voneinander höhenverschieblich gelagert sind.

7. Vorrichtung nach einem der vorgenannten Ansprüche,
wobei zumindest ein, bevorzugt zwei oder mehrere, Magnetträgereinrichtungen (16) auf einer Magnetträgertransporteinrichtung (52) auswechselbar nebeneinander und/oder hintereinander benachbart angeordnet werden können.

8. Vorrichtung nach einem der vorgenannten Ansprüche, weiterhin umfassend eine Läufervermessungseinrichtung (54) zur Vermessung, bevorzugt optischen Vermessung, der Lageposition des Läuferrohlings (12) für eine definierte Ausrichtung des Läuferrohlings (12), wobei die Läufervermessungseinrichtung (54) ausgelegt ist, Lage, Anzahl und Größe der Aufnahmenuten (32) zu vermessen und hieraus die Anzahl der zu übergebenden Permanentmagnete (14) zu berechnen und/oder den Läuferrohling (12) in der Läuferführungseinrichtung (18) lagerichtig auszurichten.

9. Verfahren zur Übergabe eines Permanentmagneten (14) oder Permanentmagnetrohlings in eine Aufnahmenut (32) eines Läuferrohlings (12) eines Elektromotors oder -generators unter Verwendung einer Magnetübergabevorrichtung (10) nach einem der vorangegangenen Ansprüche 2 bis 7, umfassend die Schritte:
- S1-S2: Ausrichten des Läuferrohlings (12) in eine definierbare Aufnahmeposition durch die Läuferführungseinrichtung (18), und/oder Magnetträgereinrichtung (16);
- S3: Relatives, horizontales Verfahren des Läuferrohlings (12) von Richtung Abstreiffläche (44) in Richtung Anschlagschenkel (24) der Magnetträgereinrichtung (16) bis zum Anschlag eines ersten, die Aufnahmenut begrenzenden Aufnahmestegs (34) an eine erste, einer Anschlagseite des Permanentmagneten (14) an dem Anschlagschenkel der Magnetträgereinrichtung (16) gegenüberliegende Seitenfläche (28) des Permanentmagneten (14);
- S4-S5: Abrollen des Läuferrohlings (12) über den Permanentmagneten (14) bis zum Anschlag eines zweiten, die Aufnahmenut (32) begrenzenden Aufnahmestegs (34) an die an dem Aufnahmeschenkel (22) der Magnetträgereinrichtung (16) anliegende Seitenfläche (28) des Permanentmagneten (14);
- S6: Relatives Absetzen des Läuferrohlings (12) auf dem Permanentmagneten, so dass der Permanentmagnet (14) vollständig in die Aufnahmenut (32) des Läuferrohlings (12) übergeben ist;
- S7: Relatives, horizontales Verfahren des Läuferrohlings (12) mit aufgenommenen Permanentmagneten (14) bis zur Abstreiffläche (44) der Magnetträgereinrichtung (16) und Ablösen des Läuferrohlings (12) mit aufgenommenen Permanentmagneten (14) von der Magnetträgereinrichtung (16).

10. System (94) zur Bestückung eines Läuferrohlings (12) eines Elektromotors oder -generators mit Permanentmagneten (14) oder Permanentmagnetrohlingen, umfassend eine Magnetübergabevorrichtung (10) nach einem der vorgenannten Vorrichtungsansprüche 1 bis 8, eine Magnetbestückungsvorrichtung (62) und eine Magnetträgerumlaufvorrichtung (60), wobei die Magnetträgerumlaufvorrichtung (60) ausgelegt ist, zumindest einen, bevorzugt drei Magnetträgereinrichtungen (16) umlaufend an der Magnetbestückungsvorrichtung (62) und der Magnetübergabevorrichtung (10) vorbeizuführen und in eine jeweilige Arbeitsposition zu verbringen, die Magnetbestückungsvorrichtung (62) ausgelegt ist, zumindest einen Permanentmagneten/Permanentmagnetrohling (14) auf einer Aufnahmefläche (20) einer Magnetträgereinrichtung (16) abzulegen, und die Magnetübergabevorrichtung (10) ausgelegt ist, den Permanentmagneten/Permanentmagnetrohling (14) an einen zu bestückenden Läuferrohling (12) zu übergeben.

11. System nach Anspruch 10, wobei die Magnetbestückungsvorrichtung (62) zumindest ein, bevorzugt zwei, Magazine (64) zur Aufnahme einer oder mehrerer Reihen von Permanentmagneten, (14) insbesondere Permanentmagneten (14) unterschiedlicher Polarisierung umfasst, und zumindest eine, bevorzugt zwei Magnetträgereinrichtungen (16) auf einer Magnetträgertransporteinrichtung (52) benachbart nebeneinander angeordnet sind, wobei die Magnetbestückungsvorrichtung (62) ausgelegt ist, die Permanentmagnete (14) verschiedener Polarisierung aus dem bzw. den Magazinen (64) auf die Aufnahmeflächen (20) der bzw. den Magnetträgereinrichtungen (16) abzugeben, insbesondere synchronisiert parallel aufzuschieben.

12. System nach Anspruch 10 oder 11, weiterhin umfassend eine Klebemittelauftragevorrichtung (66) zur Auftragung eines Klebemittels (68) auf zumindest der der Aufnahmenut (32) des Läuferrohlings (12) zugewandten Radialinnenfläche (30) des zumindest einen Permanentmagneten (14), wobei die Klebemittelauftragevorrichtung (66) zumindest einen Klebemittelvorratsbehälter (70), eine Pumpeneinrichtung und eine Düseneinrichtung (72) zum definierten Auftrag des Klebemittels (68) umfasst.

13. System nach Anspruch 12, wobei die Klebemittelauftragevorrichtung weiterhin eine visuelle Inspektionseinrichtung (82) zur visuellen Erfassung des Klebemittelauftrages (68) umfasst, wobei die Inspektionseinrichtung (82) bevorzugt ein Beleuchtungsmittel (84) und ein Bilderkennungsmittel (86) zur automatisierten Kontrolle und/oder Protokollierung des Klebemittelauftrags (68) umfasst.

14. System nach einem der Ansprüche 10 bis 13, wobei die Magnetträgerumlaufvorrichtung (60) im Wesentlichen eine Zweiebenenumlaufvorrichtung (74) ist, wobei die Magnetträgerumlaufvorrichtung (60) in einer ersten oberen Ebene (76) zumindest eine Magnetträgereinrichtung (16), bevorzugt angeordnet auf einer Magnetträgertransporteinrichtung (52) entlang von zumindest der Magnetbestückungsvorrichtung (62) und der Magnetübergabevorrichtung (10) vorbei führen und in eine jeweilige Arbeitspositionen verbringen kann und in einer zweiten unteren Ebene (78) die Magnetträgereinrichtung (16) umlaufend in eine Anfangsposition (80) führen kann.
